# EUROPEAN PATENT SPECIFICATION

(11) **EP 3 301 429 B1**
(45) Date of publication and mention of the grant of the patent: **11.09.2019**
(21) Application number: 17193444.1
(22) Date of filing: 27.09.2017
(51) Int. Cl.: G01N 1/31, G01N 1/28, G01N 15/14, G01N 15/00, G01N 35/04, G01N 35/00

(54) **BLOOD SAMPLE TESTING APPARATUS AND BLOOD SAMPLE TESTING METHOD**
BLUTPROBENTESTVORRICHTUNG UND BLUTPROBENTESTVERFAHREN
APPAREIL DE TEST D'ÉCHANTILLONS SANGUINS ET PROCÉDÉ DE TEST D'ÉCHANTILLONS SANGUINS

(30) Priority: 29.09.2016 JP 2016191450
(43) Date of publication of application: 04.04.2018
(73) Proprietor: SYSMEX CORPORATION, Kobe-shi Hyogo 651-0073 (JP)
(72) Inventor: ODA, Tetsuya, Hyogo, 651-0073 (JP); SHINABE, Seiya, Hyogo, 651-0073 (JP); KAJINO, Shouhei, Hyogo, 651-0073 (JP); NISHIKAWA, Ken, Hyogo, 651-0073 (JP); FUKUMA, Daigo, Hyogo, 651-0073 (JP)
(74) Representative: Hoffmann Eitle

(56) References cited:
- EP-A2- 2 098 867
- JP-A- 2015 028 492
- US-A- 5 209 903

## Description

### BACKGROUND

The disclosure relates a blood sample testing apparatus and a blood sample testing method of performing sample measuring and preparation of a smear.

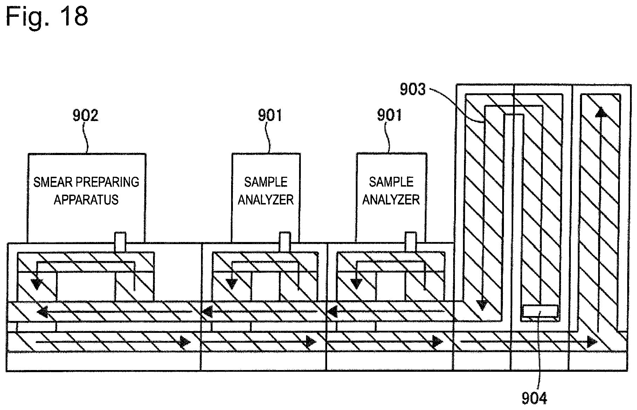

Japanese Patent Application Publication No. 2013-210266 (Patent Literature 1) discloses a sample processing system in which sample analyzer 901 and smear preparing apparatus 902 are connected to each other by supply line 903 (hatched section) as illustrated in Fig. 18. Supply line 903 includes a single first line for transporting rack 904, which holds sample containers, to sample analyzer 901 and smear preparing apparatus 902, and a single second line for collecting rack 904 for which processing in the analyzers and apparatus is completed. The first line is capable of transporting rack 904 only in one direction from sample analyzer 901 side to smear preparing apparatus 902 side and cannot transport rack 904 in the opposite direction. Sample analyzer 901 is disposed on an upstream side of supply line 903. Smear preparing apparatus 902 is disposed on a downstream side of supply line 903. First, rack 904 is transported to sample analyzer 901, where sample measurement is performed on all the test target sample containers held by rack 904. Thereafter, rack 904 is transported to smear preparing apparatus 902, where sample measurement is performed on all the smear preparation target sample containers held by rack 904.

In a sample test, a retest, which is second or subsequent sample measurement, is performed in some cases, such as in a case where an abnormal value of a certain sample is obtained in an initial test, which is first sample measurement. In the sample processing system of Patent Literature 1, after all kinds of sample measurement including the initial test and the retest are completed for all of the test target sample containers held by rack 904, rack 904 is transported from sample analyzer 901 to smear preparing apparatus 902.

In Patent Literature 1 described above, the smear preparation in the smear preparing apparatus is started after all the kinds of test measurement including the initial test and the retest are executed on all the sample containers held by the rack. Therefore, a standby time of the smear preparing apparatus increases, and it takes a long time to perform entire sample test processing including the sample measurement and the smear preparation. Therefore, it is desired to reduce a processing time required for the sample test processing including the sample measurement and the smear preparation.

According to one or more embodiments may reduce the processing time required for the sample test processing including the sample measurement and the smear preparation.

Further, EP 2 098 867 A2 is concerned with an analyzer and a transportation device.

### SUMMARY

A blood sample testing apparatus 100 according to a first aspect is defined in claim 1.

In blood sample testing apparatus 100 according to a first aspect, as explained above, transport unit 30 capable of transporting sample container 80 from first position 91 to second position 92 and from second position 92 to first position 91 is provided. Consequently, sample container 80 can be reciprocated between first position 91 of blood-cell-count measurement unit 10 and second position 92 of smear preparation unit 20. Therefore, sample container 80 can be transported to smear preparation unit 20 before sample measurement for all of sample containers 80 is completed in blood-cell-count measurement unit 10. As a result, it is possible to reduce a processing time required for sample test processing including the sample measurement and smear preparation.

In blood sample testing apparatus 100 according to a first aspect, it may be preferable that transport unit 30 includes belt unit 31 capable of transporting sample container 80 in a forward direction from first position 91 to second position 92 and in a backward direction from second position 92 to first position 91. If blood sample testing apparatus 100 is configured in this way, it is possible to reciprocate sample container 80 between first position 91 and second position 92 with a simple configuration by the belt transport.

In this case, it may be preferable that belt unit 31 includes first belt 31a and second belt 31b capable of transporting sample container 80 in the forward direction and in the backward direction, respectively. If blood sample testing apparatus 100 is configured in this way, it is possible to independently reciprocate, with first belt 31a and second belt 31b, sample container 80 between first position 91 and second position 92.

In blood sample testing apparatus 100 according to a first aspect, the transport unit 30 transports sample rack 81 capable of holding a plurality of sample containers 80, thereby transporting sample containers 80 held by sample rack 81 to the first position 91 and the second position 92. If blood sample testing apparatus 100 is configured in this way, even when sample containers 80 are reciprocated between first position 91 and second position 92, it is possible to transport sample containers 80 in units of sample rack 81 unlike a case in which sample containers 80 are transported one by one. Therefore, it is possible to simplify transport processing.

In this case, it may be preferable that blood sample testing apparatus 100 includes control unit 41 that causes transport unit 30 to transport first sample container 80 held by sample rack 81 to first position 91 and thereafter transport second sample container 80 held by sample rack 81 to second position 92 before collecting first sample container80 into sample rack 81. If blood sample testing apparatus 100 is configured in this way, even while first sample container 80 is transported to blood-cell-count measurement unit 10 and the sample measurement is performed, it is possible to transport second sample container 80 to smear preparation unit 20 and start the smear preparation. As a result, it is possible to further reduce the processing time required for the sample test processing.

In the configuration in which second sample container 80 held by sample rack 81 are transported to second position 92 before first sample container 80 is collected in sample rack 81, it may be preferable that control unit 41 causes transport unit 30 to transport second sample container 80 to second position 92 and thereafter collect first sample container 80 in sample rack 81 from first position 91 before collecting second sample container 80 in sample rack 81. If blood sample testing apparatus 100 is configured in this way, even after second sample container 80 is transported to smear preparation unit 20, it is possible to collect first sample container 80 from blood-cell-count measurement unit 10 before collecting second sample container 80 into sample rack 81 and transport next sample container 80 to blood-cell-count measurement unit 10. As a result, during processing in one of blood-cell-count measurement unit 10 and smear preparation unit 20, it is possible to continuously carry out an operation for transporting sample containers 80 to the other unit and start processing. Therefore, it is possible to further reduce the processing time required for the sample test.

In the configuration in which transport unit 30 transports sample rack 81, the blood sample testing apparatus 100 comprises a control unit 41 that selects which of the first position 91 and the second position 92 the sample container 80 for which measurement of an initial test is already performed by blood-cell-count measurement unit 10 is to be first transported to. If blood sample testing apparatus 100 is configured in this way, transport order is not fixed. Therefore, for example, in a case where both of a retest and the smear preparation are performed, it is possible to select blood-cell-count measurement unit 10 or smear preparation unit 20, to which sample containers 80 can be transported more quickly, and transport sample containers 80. As a result, it is possible to further reduce the processing time required for the sample test.

In this case, the control unit 41 causes the transport unit 30 to transport sample container 80 for which the measurement of the initial test is already performed by blood-cell-measurement unit (10) to one of the first position 91 and the second position 92, to which a transport distance of sample rack 81 is shorter. If blood sample testing apparatus 100 is configured in this way, it is possible to reduce a time required for the transport of sample rack 81. Therefore, it is possible to reduce a standby time of blood-cell-count measurement unit 10 or smear preparation unit 20, which is a transport destination. As a result, it is possible to further reduce the processing time required for the sample test.

In the configuration in which it is selected which of first position 91 and second position 92 sample container 80 is to be first transported, in a case where both of a retest order and a smear preparation order are set for sample container 80 for which the measurement of the initial test is already performed, it may be preferable that control unit 41 causes transport unit 30 to transport sample container 80 in either one of first
transport of transporting sample container 80 first to first position 91 and then to second position 92 and second transport of transporting sample container 80 first to second position 92 and then to first position 91. If blood sample testing apparatus 100 is configured in this way, when the same sample container 80 is to be transported to both of blood-cell-count measurement unit 10 and smear preparation unit 20, it is possible to transport sample container 80 to the positions in the order in which the standby time is shorter and sample container 80 can be processed more quickly. As a result, it is possible to further reduce the processing time required for the sample test.

In this case, it may be preferable that, in a condition in which a transport distance of sample rack 81 to first position 91 is shorter than a transport distance of sample rack 81 to second position 92 and blood-cell-count measurement unit 10 is usable to measure a sample, control unit 41 selects the first transport. If blood sample testing apparatus 100 is configured in this way, it is possible to reduce a time required for the transport of sample rack 81 and carry out the sample measurement immediately after the transport. Therefore, it is possible to further reduce the processing time required for the sample test by selecting the first transport.

In the configuration in which control unit 41 performs the control for transporting sample rack 81 in either one of the first transport and the second transport, it may be preferable that, in a condition in which a transport distance of sample rack 81 to second position 92 is shorter than a transport distance of sample rack 81 to first position 91 and smear preparation unit 20 is usable to prepare a smear, control unit 41 selects the second transport. If blood sample testing apparatus 100 is configured in this way, it is possible to reduce a time required for the transport of sample rack 81 and carry out the smear preparation immediately after the transport. Therefore, it is possible to further reduce the processing time required for the sample test by selecting the second transport.

In blood sample testing apparatus 100 according to a first aspect, it may be preferable that smear preparation unit 20 prepares a smear under a smearing condition depending on a measurement result of the sample by blood-cell-count measurement unit 10, and blood sample testing apparatus 100 includes control unit 41 that performs, when a smear preparation order is set based on the measurement result of the sample, control for starting transport of sample containers 80 to second position 92 after blood-cell-count measurement unit 10 generates the measurement result of the sample. If blood sample testing apparatus 100 is configured in this way, it is possible to prepare a high-quality smear under appropriate smearing conditions corresponding to a state of the sample grasped from the measurement result. Even in this case, while initial test measurement of sample containers 80 held by sample rack 81 is performed, it is possible to transport sample containers 80 after the generation of the measurement result to smear preparation unit 20. Therefore, it is possible to reduce the processing time required for the sample test while securing the quality of a smear.

In this case, it may be preferable that, in a condition in which a smear preparation order is set in advance before the measurement of the sample, control unit 41 starts the transport of sample containers 80 to second position 92 before blood-cell-count measurement unit 10 generates the measurement result of the sample. In a condition in which the smear preparation order is set in advance, if the measurement result of the sample is generated by a point in time when the preparation of a smear is started in smear preparation unit 20, it is possible to prepare a smear under appropriate smearing conditions. Therefore, in a condition in which the smear preparation order is set in advance, by making it possible to start the transport of sample containers 80 before the generation of the measurement result of the sample, it is possible to further reduce the processing time required for the sample test.

In the configuration in which transport unit 30 transports sample rack 81, it may be preferable that blood sample testing apparatus 100 includes control unit 41 that causes transport unit 30 to transport sample containers 80 held by sample rack 81 to first position 91 and second position 92 in a certain order, and control unit 41 causes transport unit 30 to transport sample rack 81 preferentially to first position 91 or to second position 92, to which a transport distance of sample rack 81 is shorter. If blood sample testing apparatus 100 is configured in this way, it is possible to reduce a time required for executing respective kinds of transport processing. Therefore, it is possible to prevent a standby time for transport waiting from occurring in blood-cell-count measurement unit 10 and smear preparation unit 20. As a result, it is possible to effectively reduce the processing time required for the sample test.

In this case, it may be preferable that control unit 41 causes transport unit 30 to transport sample rack 81 depending on their respective operation states of blood-cell-count measurement unit 10 and smear preparation unit 20. If blood sample testing apparatus 100 is configured in this way, it is possible to efficiently select processable transport processing depending on the operation states of blood-cell-count measurement unit 10 and smear preparation unit 20. As a result, it is possible to prevent the transport of sample rack 81 from being stopped by a processing wait of blood-cell-count measurement unit 10 and smear preparation unit 20. Therefore, it is possible to improve efficiency of the transporting operation and effectively reduce the processing time required for the sample test.

In the configuration in which transport unit 30 transports sample rack 81, it may be preferable that blood-cell-count measurement unit 10 and smear preparation unit 20 each include gripping unit 11a that grips each of sample containers 80 held by sample rack 81 and aspirator 11 or 21 that aspirates the sample stored in each of sample containers 80. If blood sample testing apparatus 100 is configured in this way, blood-cell-count measurement unit 10 and smear preparation unit 20 can have a common structure for aspirating the sample from sample container 80. Therefore, it is possible to simplify the apparatus configuration.

In this case, it may be preferable that gripping unit 11a grips sample container 80 held by sample rack 81 on transport unit 30. If blood sample testing apparatus 100 is configured in this way, sample container 80 held by sample rack 81 transported by transport unit 30 can be gripped by gripping unit 11a. Therefore, it is possible to surely aspirate the sample.

In the configuration in which transport unit 30 transports sample rack 81, it may be preferable that blood sample testing apparatus 100 includes sample-rack supply unit 32 that supplies sample rack 81 to transport unit 30 and sample-rack collection unit 33 that collects sample rack 81 from transport unit 30. If blood sample testing apparatus 100 is configured in this way, it is possible to collect sample rack 81, for which all kinds of sample test processing are completed, from transport unit 30 to sample-rack collection unit 33 and to quickly supply the next sample rack 81 from sample-rack supply unit 32 to transport unit 30. As a result, it is possible to effectively reduce the processing time required for the sample test.

A blood sample testing method according to a second aspect is defined in claim 11.

In the blood sample testing method according to a second aspect, since the blood sample testing method is configured as explained above, by reciprocating sample rack 81 between first position 91 for performing the blood-cell-count measurement and second position 92 for performing the preparation of the smear, it is possible to transport sample container 80 to second position 92 and start the smear preparation before the blood-cell-count measurement for all of sample containers 80 is completed. As a result, it is possible to reduce processing time require for sample test processing including the sample measurement and the smear preparation.

In the blood sample testing method according to a second aspect, the blood sample testing method further includes performing blood-cell-count measurement of a blood sample stored in a first sample container 80 of sample containers held by the sample rack 81 transported to first position 91 and transporting, before first sample container 80 is collected into the sample rack 81 at the first position 91, transporting the sample rack 81 to the second position 92 and performing preparation of a smear of the blood sample stored in a second sample container 80 of sample containers held by the sample rack 81. If the blood sample testing method is configured in this way, even during the blood-cell-count measurement for the blood sample in first sample container 80 in first position 91, it is possible to transport second sample container 80 to second position 92 and start the smear preparation. As a result, it is possible to further reduce the processing time required for the sample test processing.

According to one or more aspects, it may be possible to reduce the processing time required for the sample test processing including the sample measurement and smear preparation.

### BRIEF DESCRIPTION OF DRAWINGS

Fig. 1 is a schematic view illustrating an overview of a blood sample testing apparatus according to one or more embodiments;
Fig. 2 is a plan view illustrating the configuration of a transport unit of a blood sample testing apparatus;
Fig. 3 is a schematic view illustrating the configuration of an aspirator of a blood sample testing apparatus;
Fig. 4 is a schematic view illustrating the configuration of a smearing unit of a blood sample testing apparatus;
Fig. 5 is a block diagram illustrating the configuration of an information processing apparatus;
Fig 6 is a diagram illustrating retest determination and smear preparation determination of an information processing apparatus;
Fig. 7 is a diagram illustrating an example of a smearing condition list;
Fig. 8A is a diagram illustrating a case in which transport to a smear preparation unit is started after generation of a measurement result;
Fig. 8B is a diagram illustrating a case in which transport to a spear preparation unit is started before generation of measurement result;
Figs. 9A to 9E are diagrams illustrating stages of a transporting operation of sample containers by a transport unit;
Fig. 10 is a diagram illustrating first transport by a transport unit;
Fig. 11 is a diagram illustrating second transport by a transport unit;
Fig. 12 is a flowchart illustrating an example of main processing of transport control processing by a control unit;
Fig. 13 is a flowchart illustrating an example of unit transport processes;
Fig. 14 is a flowchart illustrating an example of processing list update processing;
Fig. 15 is a flowchart illustrating an example of selection and execution processing of unit transport processes;
Fig. 16 is a diagram illustrating a first case of an operation example of a blood sample testing apparatus;
Fig. 17 is a diagram illustrating a second case of an operation example of a blood sample testing apparatus; and
Fig. 18 is a schematic diagram illustrating a conventional sample processing system.

### DETAILED DESCRIPTION

Embodiments are explained below with reference to drawings.

### (Overall configuration of a blood sample testing apparatus)

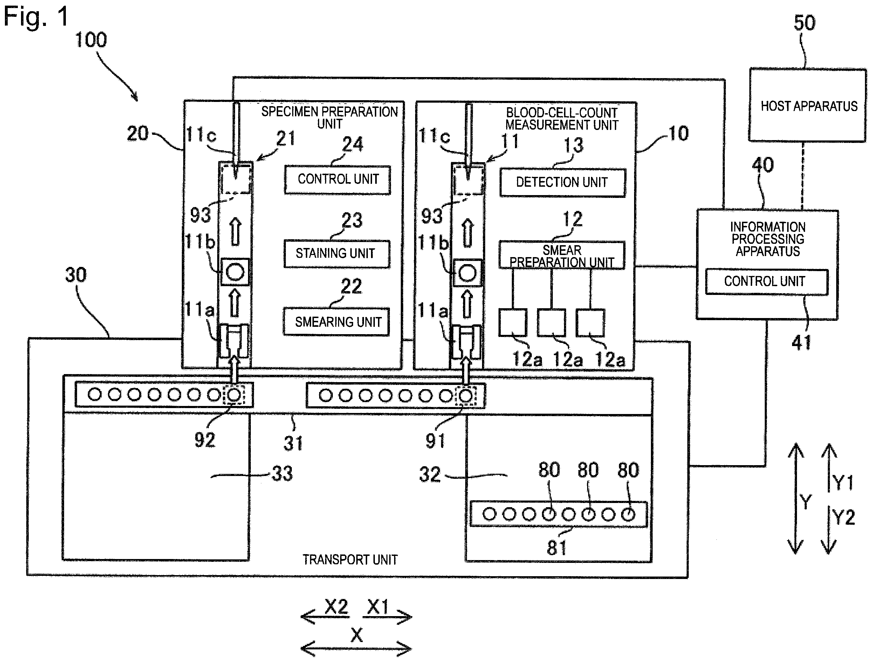

An overall configuration of blood sample testing apparatus 100 according to one or more embodiments is explained with reference to Fig. 1. Blood sample testing apparatus 100 includes blood-cell-count measurement unit 10 for performing sample measurement, smear preparation unit 20 for preparing a smear of a sample, and transport unit 30 capable of transporting sample containers 80, which store the sample, to each of blood-cell-count measurement unit 10 and smear preparation unit 20. Consequently, blood sample testing apparatus 100 can perform measurement of the sample stored in sample containers 80 and smear preparation. Blood sample testing apparatus 100 includes information processing apparatus 40 for controlling blood-cell-count measurement unit 10, spear preparation unit 20, and transport unit 30.

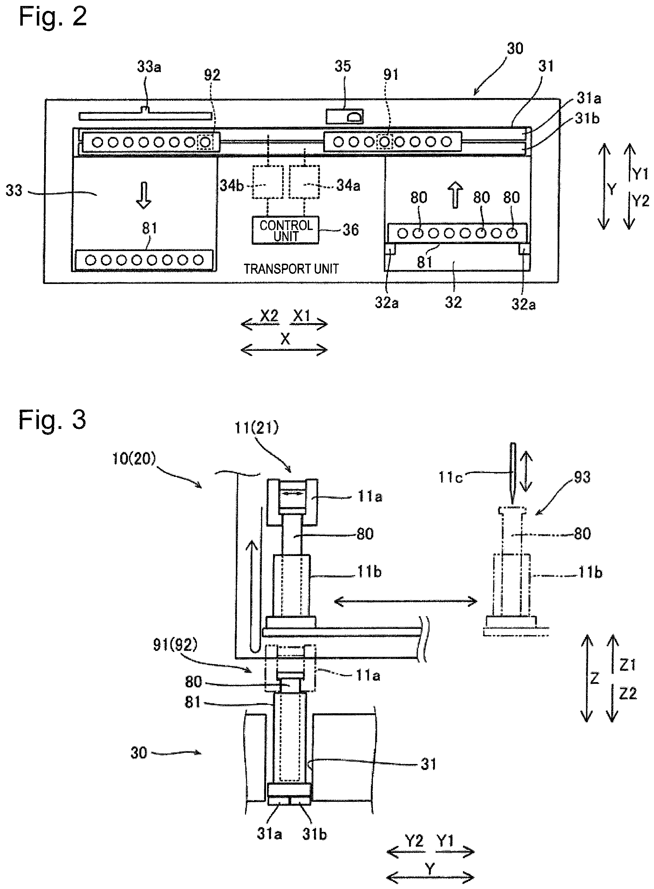

In blood sample testing apparatus 100, blood-cell-count measurement unit 10 and smear preparation unit 20 are disposed side by side in a predetermined direction. Transport unit 30 transports sample containers 80 along the predetermined direction. In the following explanation, an X direction in which blood-cell-count measurement unit 10 and smear preparation unit 20 are arranged is referred to as left-right direction, a Y direction orthogonal to the X direction is referred to as front-rear direction, and a Z direction (see Fig. 3) orthogonal to the X direction and the Y direction is referred to as up-down direction. A Y1 direction is a near side or front side of the apparatus and a Y2 direction is a depth side or rear side of the apparatus.

The sample is a biological specimen sampled from a subject and is, for example, blood. Sample container 80 is a tubular container opened at the upper end such as a blood collection tube. The sample is stored inside sample container 80. Sample container 80 is a cylindrical container formed by glass, synthetic resin, or the like having translucency.

Blood-cell-count measurement unit 10 performs measurement of the blood sample stored in sample containers 80. Measurement items of the sample are not particularly limited. In a configuration example illustrated in Fig. 1, blood-cell-count measurement unit 10 is a multiple-item blood cell analyzer that classifies blood cells included in a blood sample and counts the number of blood cells for each of classified kinds.

Blood-cell-count measurement unit 10 includes aspirator 11, specimen preparation unit 12, and detection unit 13. Aspirator 11 aspirates the sample from sample container 80. Specimen preparation unit 12 prepares a specimen for detection from the sample aspirated by aspirator 11. Detection unit 13 detects a measurement target component from the specimen for detection prepared by specimen preparation unit 12. In the configuration example illustrated in Fig. 1, the measurement target component is a blood component such as a blood cell of the blood sample.

Aspirator 11 can take sample container 80, which is transported to a taking-in position on belt unit 31 of transport unit 30, into the inside of blood-cell-count measurement unit 10 and aspirate the sample stored in sample container 80. The taking-in position of blood-cell-count measurement unit 10 is first position 91 in Fig. 1. Aspirator 11 includes gripping unit 11a that grips and takes out sample container 80, container transfer unit 11b that holds sample container 80 taken out by gripping unit 11a and transfers sample container 80 to aspiration position 93, and aspiration tube 11c for piecing through a lid of sample container 80 transferred to aspiration position 93 and aspirating the sample on the inside.

Specimen preparation unit 12 is connected to, in terms of fluid, reagent containers 12a in which various reagents such as a staining reagent, a hemolytic agent, and a diluent are stored. Specimen preparation unit 12 supplies the respective reagents and the sample aspirated by aspirator 11 to a not-illustrated reaction chamber and mixes and agitates the reagents and the sample, thereby preparing a specimen for detection suitable for the detection by detection unit 13.

Detection unit 13 performs component detection of measurement items from the specimen for detection prepared by specimen preparation unit 12. For example, detection unit 13 can perform RBC (red blood cell) detection and PLT (platelet) detection according to sheath flow DC detection method. Detection unit 13 performs, for example, HGB (hemoglobin) detection according to an SLS-hemoglobin method. Detection unit 13 performs, for example, detection of a WBC (white blood cell), a NEUT (neutrophil), an LYMPH (lymphocyte), an EO (eosinophil), a BASO (basophil), and an MONO (monocyte) according to a flow cytometry method in which a semiconductor laser is used. A detection result obtained by detection unit 13 is transmitted to information processing apparatus 40 as measurement data of the sample. Information processing apparatus 40 performs analysis processing of the measurement data obtained by detection unit 13, whereby numerical value data of the measurement items is obtained as a measurement result.

Smear preparation unit 20 can prepare a smear of a sample stored in sample container 80. Smear preparation unit 20 includes aspirator 21 that aspirates the sample in sample container 80, smearing unit 22 that drips the sample on the surface of slide glass 85 and smearing the sample, and staining unit 23 that stains the sample with a staining solution. Consequently, smear preparation unit 20 prepares a smear for a microscopic test.

Aspirator 21 has substantially the same configuration as aspirator 11 of blood-cell-count measurement unit 10. That is, aspirator 21 includes gripping unit 11a, container transfer unit 11b, and aspiration tube 11c. A taking-in position where aspirator 21 takes sample container 80 into smear preparation unit 20 is second position 92 illustrated in Fig. 1. A specific configuration example of aspirator 11 and aspirator 21 is explained below.

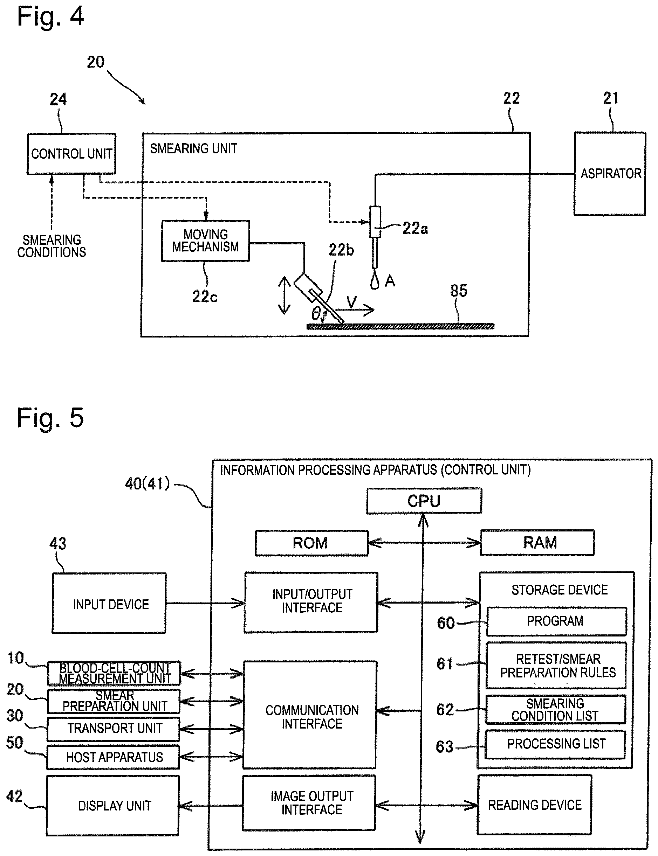

Smearing unit 22 performs smearing processing for smearing the sample on the surface of slide glass 85 (see Fig. 4). Smearing unit 22 can smear the sample according to a smearing method using a smearing member such as drawing glass (a so-called wedge method) or other smearing methods.

Staining unit 23 brings the staining solution into contact with slide glass 85 on which the sample is smeared and dried and stains the smeared sample. Staining unit 23 performs staining processing by, for example, storing the staining solution in a not-illustrated staining tank and immersing slide glass 85, on which the sample is smeared, in the staining solution in the staining tank.

Smear preparation unit 20 includes control unit 24 capable of communicating with information processing apparatus 40. Control unit 24 is configured by a control board or the like for controlling smear preparation unit 20.

Transport unit 30 is configured to be capable of transporting sample container 80 from first position 91 to second position 92 and from second position 92 to first position 91. Consequently, since it is possible to reciprocate sample rack 81 between blood-cell-count measurement unit 10 and smear preparation unit 20, it is possible to transport sample container 80 to smear preparation unit 20 before the sample measurement for all of sample containers 80 held by sample rack 81 is completed in blood-cell-count measurement unit 10. As a result, it is possible to reduce a processing time required for the sample test processing including the sample measurement and the smear preparation.

Transport unit 30 transports sample rack 81, which can hold sample containers 80, thereby transporting sample containers 80 held by sample rack 81 to first position 91 and to second position 92. Sample rack 81 holds sample containers 80 arranged in a predetermined direction. In Fig. 1, an example of a configuration is illustrated in which sample rack 81 is capable of holding a maximum of eight sample containers 80.

In the configuration example illustrated in Fig. 1, transport unit 30 includes belt unit 31 capable of transporting sample container 80 in a forward direction (an X2 direction) from first position 91 to second position 92 and a backward direction (an X1 direction) from second position 92 to first position 91. Consequently, with a simple configuration by belt transport, it is possible to reciprocate sample container 80 between first position 91 and second position 92.

Belt unit 31 is linearly formed along an array direction (the X direction) of blood-cell-count measurement unit 10 and smear preparation unit 20. Belt unit 31 is configured to be capable of linearly moving sample rack 81 in both the forward and backward directions along belt unit 31. That is, transport unit 30 can transport sample rack 81 in both directions of the X1 direction and the X2 direction on belt unit 31.

Transport unit 30 includes sample-rack supply unit 32 that supplies sample rack 81 to transport unit 30 and sample-rack collection unit 33 that collects sample rack 81 from transport unit 30. Consequently, it is possible to collect sample rack 81, for which all kinds of sample test processing is completed, from transport unit 30 to sample-rack collection unit 33 and quickly supply the next sample rack 81 from sample-rack supply unit 32 to transport unit 30. As a result, it is possible to effectively reduce the processing time required for the sample test.

Sample rack supply unit 32 can supply sample rack 81, which holds sample containers 80 that store the sample before the sample measurement and the smear preparation are carried out, to belt unit 31. Sample-rack collection unit 33 can collect sample rack 81 that holds sample containers 80, which stores the sample after the sample measurement and the smear preparation are carried out. Sample-rack supply unit 32 feeds sample rack 81 to one end portion (an X1-side end portion) of belt unit 31. Sample-rack collection unit 33 collects sample rack 81 from the other end portion (an X2-side end portion) of belt unit 31. Therefore, in belt unit 31, the one end portion (the X-1 side end portion) side is an upstream side and the other end portion (the X-2 side end portion) side is a downstream side. Blood-cell-count measurement unit 10 is disposed on the upstream side of belt unit 31 with respect to smear preparation unit 20. Smear preparation unit 20 is disposed on the downstream side of belt unit 31 with respect to blood-cell-count measurement unit 10.

Information processing apparatus 40 is configured from, for example, a PC (Personal Computer) electrically connected to blood-cell-count measurement unit 10, smear preparation unit 20, and transport unit 30. Information processing apparatus 40 is connected to host apparatus 50 such as a host computer. Information processing apparatus 40 includes control unit 41 that performs control of the transport of sample rack 81 by transport unit 30. Control unit 41 is configured as, for example, a function realized by information processing apparatus 40, which is the PC, executing a computer program for transport control.

Information processing apparatus 40 acquires a measurement order and smear preparation order for samples from host apparatus 50. Information processing apparatus 40 transmits the acquired measurement order to blood-cell-count measurement unit 10 and causes blood-cell-count measurement unit 10 to perform measurement processing based on the measurement order. Information processing apparatus 40 transmits the acquired smear preparation order to smear preparation unit 20 and causes smear preparation unit 20 to perform the smear preparation according to the smear preparation order. Information processing apparatus 40 acquires measurement data of the sample from blood-cell-count measurement unit 10 and performs necessity determination of a retest and necessity determination of smear preparation based on the measurement data.

### (Transport unit)

As illustrated in Fig. 2, in transport unit 30, sample rack 81, which holds sample containers 80 that store a test target sample, is set in sample-rack supply unit 32 by a user. Sample-rack supply unit 32 moves delivery unit 32a for pushing sample rack 81 onto belt unit 31 in the Y direction, thereby moving sample rack 81 to belt unit 31 side (the Y1 direction) and feeding sample rack 81 to the one end portion (the X1-side end portion) of belt unit 31. Sample containers 80 on sample rack 81 are arranged on a straight line in the X direction along belt unit 31.

In a configuration example illustrated in Fig. 2, on belt unit 31, sample racks 81 can be disposed in both the forward and backward directions. Consequently, it is possible to simultaneously transport sample racks 81 in both the forward and backward directions. Therefore, for example, immediately after sample test processing for last sample container 80 of preceding sample rack 81 is completed, it is possible to quickly transport first sample container 80 of sample rack 81 in the subsequent row.

In the configuration example illustrated in Fig. 2, belt unit 31 can individually transport sample racks 81. That is, belt unit 31 includes first belt 31a and second belt 31b capable of transporting sample container 80 in the forward direction and the backward direction, respectively. Sample containers 80 can be reciprocated between first position 91 and second position 92 independently from one another by first belt 31a and second belt 31b. First belt 31a and second belt 31b are respectively independently driven by first motor 34a and second motor 34b. First belt 31a and second belt 31b can be engaged with separate sample racks 81 by protrusion pieces (not illustrated in the figure), which respectively engage with sample racks 81, and transported in the X direction. In this configuration example, transport unit 30 transport two sample racks 81 on belt unit 31 independently from each other in both the forward and backward directions (the X1 direction and the X2 direction).

When sample container 80 is transported to blood-cell-count measurement unit 10, transport unit 30 transports sample rack 81 such that measurement target sample container 80 is disposed in first position 91 on the upstream side on belt unit 31. First position 91 is a taking-in position of sample container 80 by blood-cell-count measurement unit 10. Blood-cell-count measurement unit 10 takes out sample container 80 transported to first position 91 and perform the sample test.

When transporting sample container 80 to smear preparation unit 20, transport unit 30 transports sample rack 81 such that smear preparation target sample container 80 is disposed in second position 92 on the downstream side of belt unit 31. Second position 92 is taking-in position of sample container 80 by smear preparation unit 20. Smear preparation unit 20 takes out sample container 80 transported to second position 92 and performs the smear preparation.

Transport unit 30 includes delivery unit 33a for pushing sample rack 81 from belt unit 31 to sample-rack collection unit 33. Sample-rack collection unit 33 moves delivery unit 33a in the Y direction, thereby moving sample rack 81 to sample-rack collection unit 33 side (the Y2 direction) and collecting sample rack 81 into sample-rack collection unit 33 from the other end portion (the X2-side end portion) of belt unit 31.

Transport unit 30 includes ID reading unit 35 for reading respective identification IDs of sample containers 80 held by sample rack 81 on belt unit 31. The identification ID is given to sample container 80 and sample rack 81 in a form such as a barcode or a two-dimensional code. ID reading unit 35 is a reader device for reading the identification ID. Transport unit 30 can transport sample rack 81 such that the sample is transported to a reading position where ID reading unit 35 reads the identification ID of sample container 80.

Transport unit 30 includes control unit 36 capable of communicating with information processing apparatus 40. Control unit 36 is configured by a control board or the like for controlling transport unit 30. Control unit 36 controls, according to a transporting operation command transmitted from information processing apparatus 40, delivery of sample rack 81 from sample-rack supply unit 32 onto belt unit 31, transport of sample container 80 to blood-cell-count measurement unit 10 and smear preparation unit 20, and delivery of sample rack 81 from belt unit 31 to sample-rack collection unit 33.

### (Aspirator)

Aspirators (11 and 21) of blood-cell-count measurement unit 10 and smear preparation unit 20 are explained. Fig. 3 is a schematic view illustrating a configuration example of a portion that takes out sample container 80 from sample rack 81 in aspirator 11 (aspirator 21).

In the configuration example illustrated in Fig. 3, blood-cell-count measurement unit 10 and smear preparation unit 20 include gripping unit 11a that grips sample container 80 held by sample rack 81 transported by transport unit 30 and aspirator 11 (21) that aspirates the sample stored in sample container 80. A structure for aspirating the sample from sample container 80 can be made common to blood-cell-count measurement unit 10 and smear preparation unit 20. Therefore, it is possible to simplify the apparatus configuration.

In the configuration example illustrated in Fig. 3, gripping unit 11a of aspirator 11 and aspirator 21 performs operation for gripping sample container 80 transported by transport unit 30 and taking out sample container 80 from sample rack 81 to position where the transport is not hindered. Consequently, it is possible to quickly bring sample rack 81 into a movable state. As a result, since quick rack transport can be performed, it is possible to effectively reduce the processing time required for the sample test.

In the configuration example illustrated in Fig. 3, gripping unit 11a of aspirator 11 and aspirator 21 is disposed in a position immediately above first position 91 and second position 92. Gripping unit 11a can grip sample container 80 by sandwiching an upper end portion of sample container 80 with a pair of finger sections. Gripping unit 11a can drive the finger sections with a not-illustrated actuator and switch gripping and release of the gripping of sample container 80. Gripping unit 11a can move in the up-down direction (the Z direction) with a not-illustrated lifting and lowering mechanism.

Gripping unit 11a grips sample container 80 held by sample rack 81 on first belt 31a and second belt 31b. Consequently, even in a configuration in which sample rack 81 can be transported in the forward and backward direction using belts (31a and 31b), transported sample container 80 can be gripped by gripping unit 11a. Therefore, it is possible to surely aspirate the sample. Gripping unit 11a grips, from the upward direction (the Z1-direction side), sample container 80 held by sample rack 81 on belt unit 31 and lifts sample container 80 upward to thereby take out sample container 80 from sample rack 81.

Container transfer unit 11b of aspirator 11 and aspirator 21 is configured as a holding unit that can hold sample container 80. Container transfer unit 11b can move to a position right above first position 91 or second position 92 of belt unit 31 and aspiration position 93 by aspiration tube 11c. Aspiration position 93 is provided on the inside of each of blood-cell-count measurement unit 10 and smear preparation unit 20 separated from the upward direction of belt unit 31. Container transfer unit 11b is disposed in a position further in the upward direction (the Z1-direction) than sample container 80 on sample rack 81. Sample container 80 taken out from sample rack 81 by gripping unit 11a is set in container transfer unit 11b.

When sample container 80 is returned to sample rack 81, container transfer unit 11b transfers sample container 80 from aspiration position 93 to a position right above first position 91 or second position 92. Gripping unit 11a grips and takes out sample container 80 from container transfer unit 11b. After container transfer unit 11b is retracted to a predetermined position on the inside, gripping unit 11a sets sample container 80 in sample rack 81 on belt unit 31.

With this configuration, immediately after sample container 80 is taken out from sample rack 81 by gripping unit 11a, transport unit 30 can start transport of sample rack 81.

### (Smearing unit)

Fig. 4 illustrates a configuration example of smearing unit 22 that performs smearing processing according to the wedge method. Smearing unit 22 includes dripping unit 22a that drips the sample onto slide glass 85 and smearing member 22b such as drawing glass.

Dripping unit 22a is connected to aspirator 21 in terms of fluid. Dripping unit 22a drips the sample having a dispensing amount A set under smearing conditions onto slide glass 85. Smearing member 22b is moved, by moving mechanisms 22c, in the up-down direction in which smearing member 22 approaches and separates from slide glass 85 and in a horizontal direction parallel to the surface of slide glass 85. Smearing unit 22 brings smearing member 22b close to the surface of slide glass 85 and translates smearing member 22b, thereby smearing the sample dripped onto the surface of slide glass 85. Smearing unit 22 can adjust, according to smearing conditions, the dispensing amount A of the sample, moving velocity V of smearing member 22b, and an inclination angle θ of smearing member 22b with respect to slide glass 85. The sample is smeared to be applied in an amount and thickness suitable for a microscopic test in which slide glass 85 is used.

Control unit 24 acquires, for each sample, information concerning the smearing conditions from information processing apparatus 40. Control unit 24 controls smearing unit 22 and staining unit 23 according to the smearing conditions set for each sample aspirated by aspirator 21.

### (Information processing apparatus)

Fig. 5 illustrates a configuration example of information processing apparatus 40.

Information processing apparatus 40 is a computer including a CPU, a ROM, a RAM, a storage device such a hard disk, an input/output interface, a communication interface, and a reading device. The CPU executes computer program 60, whereby the computer functions as information processing apparatus 40. Information processing apparatus 40 includes display unit 42 and input device 43. Display unit 42 can display an analysis result and the like obtained by analyzing data of a digital signal transmitted from blood-cell-count measurement unit 10. Computer program 60 is, for example, read from a recording medium by the reading device and installed in information processing apparatus 40.

The CPU executes computer program 60, whereby information processing apparatus 40 functions as control unit 41 and transmits a transporting operation command to transport unit 30. In transport unit 30, control unit 36 (see Fig. 2), which receives the transporting operation command, controls the operations of units such as belt units 31, thereby executing a transporting operation of sample rack 81. Consequently, a transporting operation of transport unit 30 is controlled by control unit 41. Control unit 41 may be configured by independent hardware separate from information processing apparatus 40. Control unit 41 may be configured by control unit 36 of transport unit 30. In the storage device, retest/smear preparation rules 61, smearing condition list 62 of smear preparation unit 20, processing list 63, explained below, of transport unit 30, and the like are stored.

### (Retest/smear preparation rules)

When acquiring measurement data of the sample from blood-cell-count measurement unit 10, information processing apparatus 40 performs necessity determination of a retest and necessity determination of smear preparation according to retest/smear preparation rules 61.

Retest/specimen preparation rules 61 mainly include a repeat rule and a rerun/reflex rule concerning necessity determination of a retest, and a specimen preparation rule concerning necessity determination of smear preparation.

The repeat rule is a rule for determining, when a measurement error occurs, whether to execute a repeat test for performing a retest in the same measurement items as the measurement items of the initial test. The reflect rule and the rerun rule are rules for performing a retest, for example, when initial test measurement is normally performed but abnormality is present in measurement values. The reflex rule is a rule for determining whether to execute a reflex test for performing a retest concerning retest items including measurement items different from measurement items measured for the sample in the initial test. The rerun rule is a rule for determining whether to execute a rerun test for performing a retest in the same measurement items as the initial test.

The smear preparation rule is a rule for determining, based on a measurement result of the initial test or the retest of the sample, whether to prepare a smear sample of the sample.

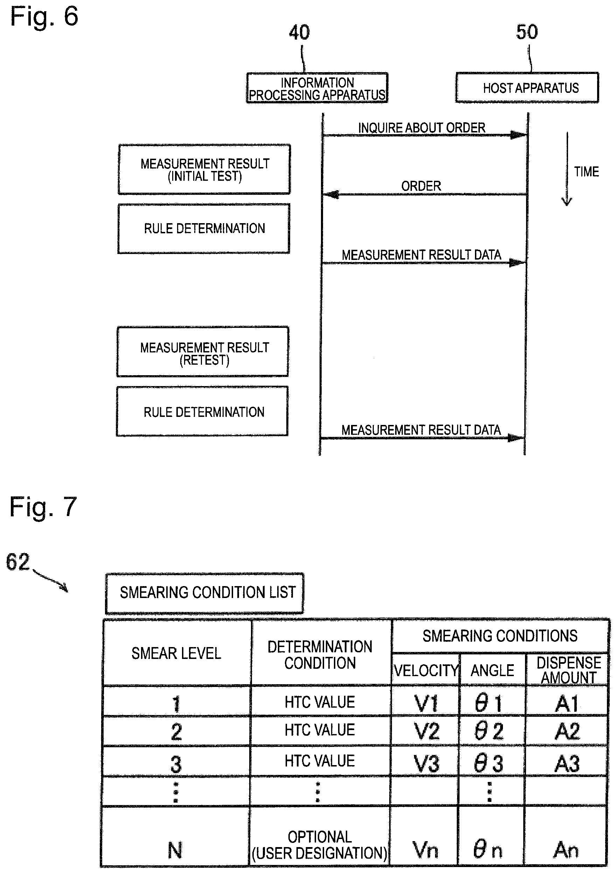

As illustrated in Fig. 6, when acquiring a sample ID, information processing apparatus 40 inquires host apparatus 50 about a measurement order of the initial test. In host apparatus 50, measurement orders including measurement items and the like of the initial test are recorded in association with sample IDs. Host apparatus 50 transmits a measurement order corresponding to the received sample ID to information processing apparatus 40. A smear preparation order is sometimes set in the sample.

When acquiring the measurement order of the initial test, information processing apparatus 40 transmits the measurement order to blood-cell-count measurement unit 10 and causes blood-cell-count measurement unit 10 to carry out sample measurement of the initial test. When acquiring measurement data of the initial test from blood-cell-count measurement unit 10, information processing apparatus 40 transmits measurement result data to host apparatus 50, performs necessity determination of a retest according to retest/smear preparation rules 61. In a case where the retest is to be performed, information processing apparatus 40 sets a retest order including measurement items of the retest. The retest order is various because the retest order is set according to the measurement result of the initial test. For example, when it is determined that a retest is necessary for a measurement result of CBC (the number of all blood cells), a retest order to which a PLT is added to measurement items in addition to CBC is set.

Information processing apparatus 40 performs necessity determination of the smear preparation according to retest/smear preparation rules 61. In a case where the smear preparation is to be performed, information processing apparatus 40 sets a smear preparation order including smearing conditions. Note that, in a case where the retest and the smear preparation are not to be performed, a retest order and a smear preparation order are not set. The subsequent processing concerning the same sample is not performed.

When performing the retest, information processing apparatus 40 transmits the retest order to blood-cell-count measurement unit 10 and acquires measurement data of the retest from blood-cell-count measurement unit 10. When the smear preparation is performed, information processing apparatus 40 transmits the smear preparation order to smear preparation unit 20 and causes smear preparation unit 20 to execute the smear preparation. Information processing apparatus 40 transmits measurement result data to host apparatus 50 and performs determination by retest/smear preparation rules 61. To prevent the retest from being limitlessly repeated, the retest is limited to a predetermined number of times. Since the smear preparation is performed only once, when the smear preparation order is already set, the necessity determination of the smear preparation is not performed.

In this way, concerning the sample in respective sample containers 80, there are a large number of cases such as a case in which only the initial test is performed, a case in which the initial test and the retest are performed, a case in which the initial test and the smear preparation are performed, and a case in which the initial test, the retest, and the smear preparation are performed.

### (Smearing conditions)

Fig. 7 illustrates an example of smearing condition list 62 stored in the storage device of information processing apparatus 40.

Smearing condition list 62 includes smearing conditions. The smearing conditions includes, as parameter, the dispensing amount A (see Fig. 4) of the sample, the moving velocity V (see Fig. 4) of smearing member 22b, and the inclination angle θ (see Fig. 4) of smearing member 22b with respect to slide glass 85. The smearing conditions may include parameters other than these parameters. In smearing condition list 62, smearing conditions in levels having different values of the parameters are set in association with determination conditions. Information processing apparatus 40 collates a measurement result of the smearing preparation target sample and the determination conditions and selects smearing conditions in a smearing level corresponding to the determination conditions. The determination conditions include, for example, a HCT (hematocrit) value, which is one of measurement results of the sample. The HCT value is a numerical value indicating a ratio of a volume of blood cells in blood and serves as an indicator of viscosity of the blood. Therefore, by setting the dispensing amount A, the moving velocity V, the inclination angle θ, and the like according to the HCT value, it is possible to perform higher quality application. As the determination conditions, besides the HCT value, in information grasped from the measurement result of the sample, the user can designate any information. That is, as the determination conditions, any information can be designated out of all measurement conditions of the sample by blood-cell-count measurement unit 10. As the parameters of the smearing conditions, the user can set any values and prepare a smearing level designated by the user.

Information processing apparatus 40 designates, for each sample, smearing conditions in a smearing level corresponding to the determination conditions and transmits the smearing conditions to smear preparation unit 20. Consequently, smear preparation unit 20 is configured to prepare a smear under smearing conditions corresponding to a measurement result of the sample by blood-cell-count measurement unit 10. As a result, it is possible to prepare a high-quality smear under appropriate smearing conditions corresponding to a state of the sample grasped from the measurement result. Note that smear preparation unit 20 may always prepare a smear under the same smearing conditions. Rather than information processing apparatus 40, control unit 24 of smear preparation unit 20 may perform the determination of the smearing conditions.

In order to determine the smear conditions corresponding to the measurement result of the sample by blood-cell-count measurement unit 10, at least a measurement result of the initial test of the sample needs to be generated. The smear preparation order is set in advance before measurement of the sample in some case and set after the measurement of the sample based on the measurement result of the sample in other cases.

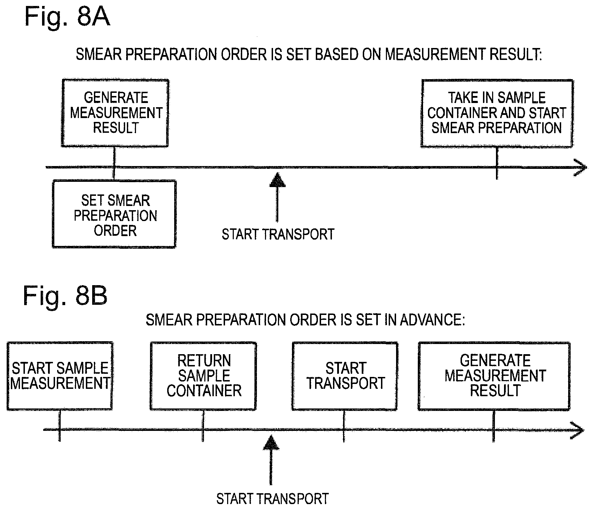

Therefore, as illustrated in Fig. 8A, when the smear preparation order is set based on the measurement result of the sample, control unit 41 performs control for starting transport of sample container 80 to second position 92 after generation of the measurement result of the sample by blood-cell-count measurement unit 10. Consequently, while the initial measurement of sample container 80 held by sample rack 81 is performed, sample container 80 after the generation of the measurement result can be transported to smear preparation unit 20. Therefore, it is possible to reduce the processing time required for the sample test while securing the quality of a smear.

As illustrated in Fig. 8B, for example, when the smear preparation order is set before the measurement of the sample, control unit 41 may start the transport of sample container 80 to second position 92 before the generation of the measurement result of the sample by blood-cell-count measurement unit 10. In a condition in which the smear preparation order is set in advance, if the measurement result of the sample is generated by a point in time when the preparation of a smear is started in smear preparation unit 20, it is possible to perform smear preparation under appropriate smearing conditions. Therefore, in a condition in which the smear preparation order is set in advance, it is possible to further reduce the processing time required for the sample test by enabling the start of the transport of sample container 80 before the generation of the measurement result of the sample.

In a condition in which the transport of sample container 80 to second position 92 is started before the generation of the measurement result, in order to set the smearing conditions, the measurement result only has to be acquired at the latest before timing when the sample is aspirated from sample container 80 in smear preparation unit 20 and smearing unit 22 starts the smearing processing. Note that, even in a condition in which the smear preparation order is set in advance before the measurement of the sample, control unit 41 may be configured to start the transport of sample container 80 to second position 82 after the generation of the measurement result of the sample.

### (Transporting operation control of the transport unit)

Transporting operation control of transport unit 30 is explained in detail.

### (Distribution of the sample containers on the rack)

First, transport of each of the sample containers 80 held by sample rack 81 is explained. Control unit 41 causes transport unit 30 to sequentially transport sample containers 80 held by sample rack 81 to first position 91 and second position 92. In the following explanation, sample containers 80 held by sample rack 81 are referred to as first to eighth sample containers according to positions counted from the downstream side (the X2 side).

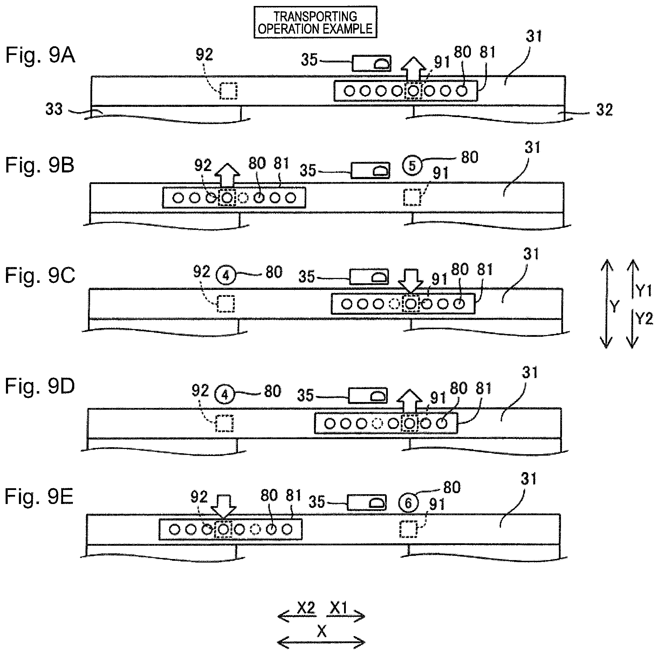

As illustrated in Figs. 9A to 9E, in one or more embodiments, control unit 41 causes transport unit 30 to transport one sample container 80 held by sample rack 81 to first position 91 and thereafter, before one sample container 80 is collected into sample rack 81, transport another sample container 80 held by sample rack 81 to second position 92.

For example, as illustrated in Fig. 9A, control unit 41 causes transport unit 30 to transport sample rack 81 such that fifth sample container 80 is disposed in first position 91. Blood-cell-count measurement unit 10 takes in fifth sample container 80 and performs the sample measurement. Thereafter, as illustrated in Fig. 9B, control unit 41 causes transport unit 30 to transport sample rack 81 such that fourth sample container 80 is disposed in second position 92. That is, before fifth sample container 80 is collected into sample rack 81 from first position 91, control unit 41 causes transport unit 30 to transport sample rack 81 to second position 92. Smear preparation unit 20 takes in fourth sample container 80 and performs the smear preparation. Thereafter, as illustrated in Fig. 9C, control unit 41 causes transport unit 30 to transport sample rack 81 in the backward direction and causes transport unit 30 to transport sample rack 81 such that a fifth holding position of sample rack 81 is disposed in first position 91. Blood-cell-mount measurement unit 10 returns fifth sample container 80, for which measurement is already performed, to sample rack 81.

By reciprocating sample rack 81 between blood-cell-count measurement unit 10 and smear preparation unit 20 in this way, even while any one sample container 80 is transported to blood-cell-count measurement unit 10 and the sample measurement is performed, it is possible to transport another sample container 80 to smear preparation unit 20 and start the smear preparation. As a result, it is possible to reduce the processing time required for the sample test processing including the sample measurement and the smear preparation.

In a configuration example illustrated in Figs. 9A to 9E, control unit 41 causes transport unit 30 to transport another sample container 80 to second position 92 and thereafter, before the other sample container 80 is collected into sample rack 81, collect one sample container 80 into sample rack 81 from first position 91.

That is, as illustrated in Fig. 9D, control unit 41 causes transport unit 30 to transport sample rack 81 such that sixth sample container 80 is disposed in first position 91 after fifth sample container 80, for which measurement is already performed, is returned to sample rack 81. Blood-cell-count measurement unit 10 takes in sixth sample container 80 and performs the sample measurement. Thereafter, as illustrated in Fig. 9E, control unit 41 causes transport unit 30 to transport sample rack 81 such that a fourth holding position is disposed in second position 92. Smear preparation unit 20 returns fourth sample container 80, for which the smear preparation is already performed, to sample rack 81.

Consequently, even after the other sample container 80 is transported to smear preparation unit 20, before the other sample container 80 is collected into sample rack 81, it is possible to collect one sample container 80 from blood-cell-count measurement unit 10 and transport the next sample container 80 to blood-cell-count measurement unit 10. As a result, during processing in one of blood-cell-count measurement unit 10 and smear preparation unit 20, it is possible to continuously carry out an operation for transporting sample container 80 to the other and causing the other to start processing. Therefore, it is possible to further reduce the processing time required for the sample test. When the sample measurement and the smear preparation are continued, control unit 41 can perform control to repeat the operation explained above.

### (Transport order of the respective sample containers)

Transport order in transporting one sample container 80 to places is explained. For example, control unit 41 selects which of first position 91 and second position 92 sample container 80 for which the measurement of the initial test is already performed by blood-cell-count measurement unit 10 is to be first transported to. In this case, since the transport order is not fixed, for example, when both of the retest and the smear preparation are to be performed, it is possible to select blood-cell-count measurement unit 10 or smear preparation unit 20 to which sample container 80 can be transported more quickly, and then to transport sample container 80. As a result, it is possible to further reduce the processing time required for the sample test.

For example, concerning sample container 80 for which the measurement of the initial test by blood-cell-count measurement unit 10 is performed, control unit 41 causes transport unit 30 to transport sample container 80 to first position 91 or second position 92, to which a transport distance of sample rack 81 is shorter. Consequently, it is possible to reduce a time required for the transport of sample rack 81. Therefore, it is possible to reduce a standby time of blood-cell-count measurement unit 10 or smear preparation unit 20 to which sample container 80 is transported. As a result, it is possible to further reduce the processing time required for the sample test.

For example, in a condition in which both of a retest order and a smear preparation order are set for sample container 80 for which the measurement of the initial test is performed, control unit 41 causes transport unit 30 to transport sample container 80 in either one of (1) first transport of transporting sample container 80 first to first position 91 and then to second position 92 and (2) second transport of transporting sample container 80 first to second position 92 and then to first position 91.

Consequently, in a condition in which the same sample container 80 is to be transported to both of blood-cell-count measurement unit 10 and smear preparation unit 20, it is possible to transport sample container 80 to the positions in the order in which the standby time is short and sample container 80 can be more quickly processed. As a result, it is possible to further reduce the processing time required for the sample test.

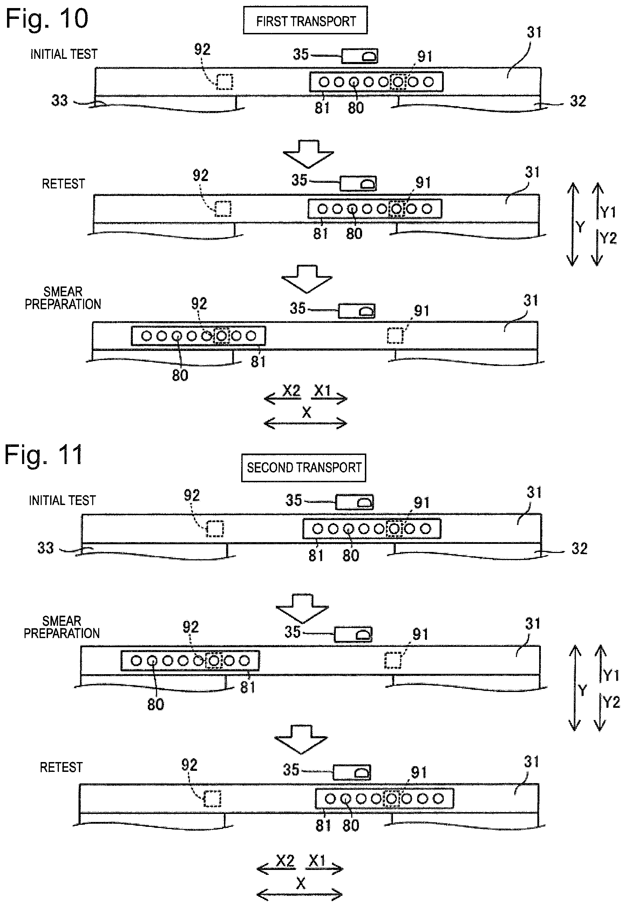

As illustrated in Fig. 10, control unit 41 causes transport unit 30 to transport, for example, sixth sample container 80 to first position 91 and serves sixth sample container 80 for the sample measurement of the initial test by blood-cell-count measurement unit 10. As a result of the initial test, both of the retest order and the smear preparation order are set in this case.

In this case, in the first transport, control unit 41 causes transport unit 30 to transport sixth sample container 80 to first position 91 at predetermined timing after the initial test and serves sixth sample container 80 for the sample measurement of the retest by blood-cell-count measurement unit 10. After the end of the retest, control unit 41 causes transport unit 30 to transport sixth sample container 80 to second position at predetermined timing and serves sixth sample container 80 for the smear preparation by smear preparation unit 20.

As illustrated in Fig. 11, in the second transport, control unit 41 causes transport unit 30 to transport sixth sample container 80 to second position 92 at predetermined timing after the initial test and serves sixth sample container 80 for the smear preparation by smear preparation unit 20. After the end of the smear preparation, control unit 41 causes transport unit 30 to transport sixth sample container 80 to first position 91 and serves sixth sample container 80 for the sample measurement of the retest by blood-cell-count measurement unit 10.

Any of the first transport and the second transport can be selected depending on a transport distance of sample rack 81 and the operation states of blood-cell-count measurement unit 10 and smear preparation unit 20. For example, in a condition in which a transport distance of sample rack 81 to first position 91 is shorter than a transport distance of sample rack 81 to second position 92 and blood-cell-count measurement unit 10 is usable to measure the sample, control unit 41 selects the first transport.

Specifically, for example, as illustrated in Fig. 9C, in a condition in which the retest or the smear preparation of sixth sample container 80 is performed at timing when fifth sample container 80 is collected from blood-cell-count measurement unit 10, the transport distance of sample rack 81 is shorter in a case where sixth sample container 80 is transported to first position 91 of blood-cell-count measurement unit 10 than in a case where sixth sample container 80 is transported to second position 92 of smear preparation unit 20. Therefore, the first transport is selected if blood-cell-count measurement unit 10 is usable to measure the sample. Consequently, it is possible to reduce a time required for the transport of sample rack 81 and carry out the sample measurement immediately after the transport. Therefore, it is possible to further reduce the processing time required for the sample test by selecting the first transport.

On the other hand, in a case where the transport distance of sample rack 81 to second position 92 is shorter than the transport distance of sample rack 81 to first position 91 and smear preparation unit 20 is usable to prepare a smear, control unit 41 selects the second transport. For example, as illustrated in Fig. 9E, in a condition in which the retest or the smear preparation of sixth sample container 80 is performed at timing when fourth sample container 80 is collected from smear preparation unit 20, the transport distance of sample rack 81 is shorter in a case where sixth sample container 80 is transported to second position 92 of smear preparation unit 20 than in a case where sixth sample container 80 is transported to first position 91 of blood-cell-count measurement unit 10. Therefore, if smear preparation unit 20 is usable to prepare a smear, the second transport is selected. Consequently, it is possible to reduce a time required for the transport of sample rack 81 and carry out the smear preparation immediately after the transport. Therefore, it is possible to further reduce the processing time required for the sample test by selecting the second transport.

Note that the transport order of sample containers 80 is not limited to this. Control unit 41 may be configured to perform only either one of the first transport and the second transport. Control unit 41 may select a transport order without taking into account the transport distance of sample rack 81.

### (Control processing of the blood sample testing apparatus)

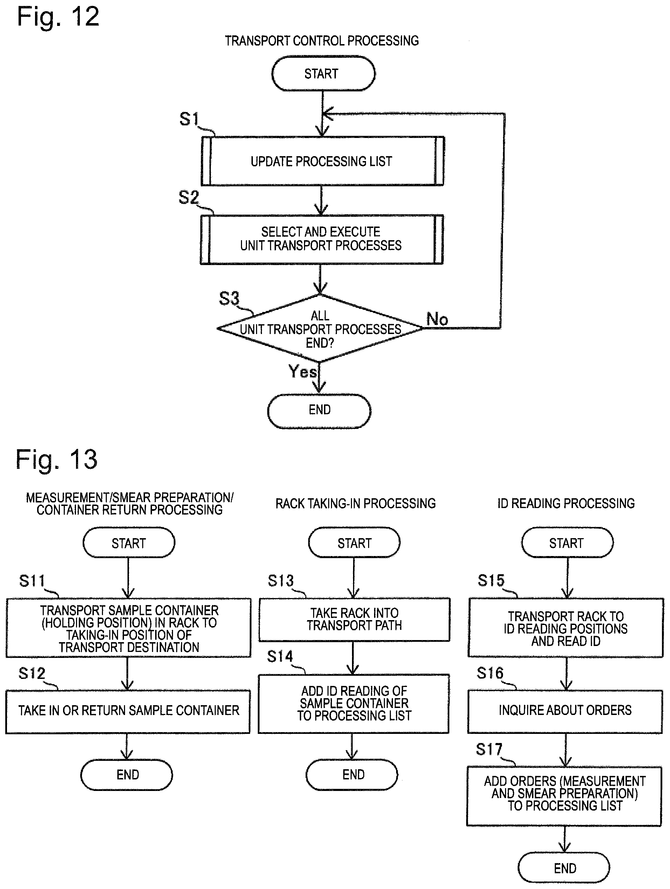

Control processing concerning rack transport of transport unit 30 in blood sample testing apparatus 100 is explained with reference to Figs. 12 to 15. The control processing explained below is executed by control unit 41. That is, information processing apparatus 40 functioning as control unit 41 executes the control processing.

### (Transport control processing)

Fig. 12 illustrates a main routine of the control processing concerning the rack transport of transport unit 30. In step S1, control unit 41 updates processing list 63 (see Fig. 5) recorded in the storage device of information processing apparatus 40. In processing list 63, individual operations executable by transport unit 30 are specified as unit transport processes and listed. That is, a unit transport process is a task serving as a unit of processing executed by control unit 41. Processing list 63 is a task list of control unit 41. Control unit 41 is configured to perform control to sequentially execute, as the unit transport processes, measurement processing and smear preparation processing, which are operations for transporting transport target sample container 80 held by sample rack 81 to blood-cell-count measurement unit 10 or smear preparation unit 20.

Examples of the unit transport processes include the measurement processing, the smear preparation processing, container return processing, rack taking-in processing, and ID reading processing. In this way, the unit transport processes include, besides the measurement processing and the smear preparation processing, the container return processing for executing an operation for collecting sample container 80 transported to blood-cell-count measurement unit 10 or smear preparation processing unit 20 from the transport destination of sample container 80.

In step S2, control unit 41 selects a unit transport process out of processing list 63 and executes the unit transport process. Control unit 41 selects and executes one unit transport process for processing executed once. Control unit 41 deletes the completed unit transport process from processing list 63.

In step S3, control unit 41 determines whether all the unit transport processes of processing list 63 end. That is, control unit 41 determines whether all the unit transport processes are deleted. In a case where a unit transport process remains in processing list 63, control unit 41 returns to step S1. In a case where all the unit transport processes are deleted, control unit 41 ends the processing.

In this way, in a processing example illustrated in Fig. 12, in step S2, control unit 41 selects a unit transport process to be executed next in every execution of a unit transport process. Consequently, every time control unit 41 executes a single unit transport processes, control unit 41 can efficiently select and execute processable the unit transport process depending on, for example, the transport distance of sample rack 81. As a result, unlike the case where control unit 41 collectively executes multiple unit transport processes, it is possible to change a transport destination of sample rack 81 depending on a situation every time the unit transport process is executed. Therefore, it is possible to improve efficiency of the transporting operation and effectively reduce the processing time require for the sample test.

### (Unit transport process)

Fig. 13 illustrates an example of unit transport processes.

All of the measurement processing, the smear preparation processing, and the container return processing are transporting operations each for moving a predetermined holding position of sample rack 81, in which sample container 80 is held, to a taking-in position of blood-cell-count measurement unit 10 or smear preparation processing 20 (i.e., first position 91 or second position 92) and supplying sample container 80 from sample rack 81 or collecting sample container 80 into sample rack 81.

When executing the measurement processing, the smear preparation processing, and the container return processing, in step S11, control unit 41 moves, with transport unit 30, predetermined sample container 80 or the predetermined holding position of sample rack 81 to the taking-in position of blood-cell-count measurement unit 10 or smear preparation unit 20. In step S12, control unit 41 stays on standby until sample container 80 is taken from sample rack 81 or until sample container 80 is returned to sample rack 81 in the transport destination.

The rack taking-in processing is processing for feeding sample rack 81 from sample-rack supply unit 32 to belt unit 31. When the rack taking-in processing is executed, in step S13, control unit 41 delivers sample rack 81 onto belt unit 31 with sample-rack supply unit 32. In step S14, control unit 41 adds ID reading processing for sample container 80 held by sample rack 81 to processing list 63.

The ID reading processing is processing for transporting sample container 80 held by sample rack 81 to ID reading positions of ID reading unit 35. Eight ID reading positions are set to correspond to respective eight holding positions of sample rack 81. When executing the ID reading processing, in step S15, control unit 41 causes transport unit 30 to transport sample rack 81 to the ID reading positions. In step S16, information processing apparatus 40 inquires host apparatus 50 about a measurement order and a smear preparation order using a sample ID of sample container 80 read by ID reading unit 35. In step S17, control unit 41 adds measurement processing and smear preparation processing corresponding to the measurement order and the smear preparation order acquired from host apparatus 50 to processing list 63.

### <Processing list update processing>

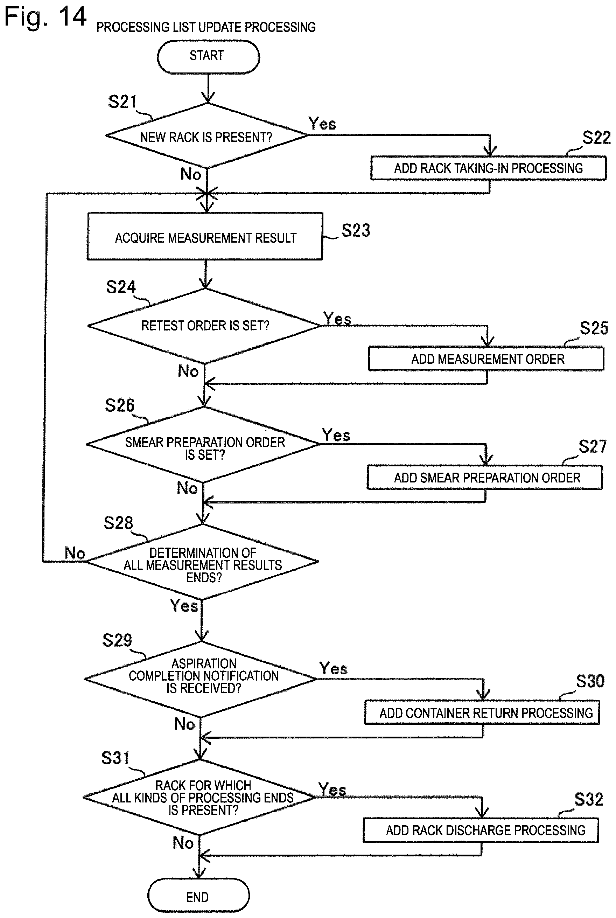

Fig. 14 illustrates an example of processing list update processing in step S1 in Fig. 12.

In step S21, control unit 41 determines whether new sample rack 81 is present in sample-rack supply unit 32. In a case where new sample rack 81 is absent, control unit 41 advances the processing to step S23. In a case where new sample rack 81 is present, in step S22, control unit 41 adds rack taking-in processing to processing list 63.

In step S23, control unit 41 acquires a measurement result by blood-cell-count measurement unit 10.

In step S24, control unit 41 determines, based on the acquired measurement result and retest/smear preparation rules 61 (see Fig. 5), whether a retest order is to be set.

In a case where a retest order is to be set, in step S25, control unit 41 sets the retest order in association with the sample ID and adds measurement processing to processing list 63. In a case where a retest order is not to be set in step S24, control unit 41 advances the processing to step S26.

In step S26, control unit 41 determines, based on the acquired measurement result and retest/smear preparation rules 61 (see Fig. 5), whether a smear preparation order is to be set.

In a case where a smear preparation order is to be set, in step S27, control unit 41 sets a smear preparation order in association with the sample ID and adds smear preparation processing to processing list 63. In a case where a smear preparation order is not set in step S26, control unit 41 advances the processing to step S28.

In step S28, control unit 41 determines, concerning measured all measurement results, whether the determination for determining whether the retest and the smear preparation is performed ends. In a case where the determination does not end, control unit 41 acquires the next measurement result in step S23 and performs necessity processing based on retest/smear preparation rules 61. In a case where the determination concerning the measured all measurement results ends, control unit 41 advances the processing to step S29.

In step S29, control unit 41 determines whether an aspiration completion notification is received from blood-cell-count measurement unit 10 or from smear preparation unit 20. In a case where the aspiration completion notification is received, control unit 41 adds container return processing to processing list 63 in step S30. In a case where the aspiration completion notification is not received, control unit 41 advances the processing to step S31.

In step S31, control unit 41 determines, concerning sample rack 81 on belt unit 31, whether sample rack 81 for which all the unit transport processes such as the measurement processing, the smear preparation processing, and the container return processing are completed is present. In a case where sample rack 81 for which all the unit transport processes are completed is present, in step S32, control unit 41 adds rack discharge processing to processing list 63 and ends the processing list update processing. The rack discharge processing is processing for transporting sample rack 81 to sample-rack collection unit 33 with delivery unit 33a. In a case where sample rack 81 for which all the unit transport processes is completed is absent, control unit 41 ends the processing list update processing without adding the rack discharge processing.

### (Selection and execution processing of the unit transport process)

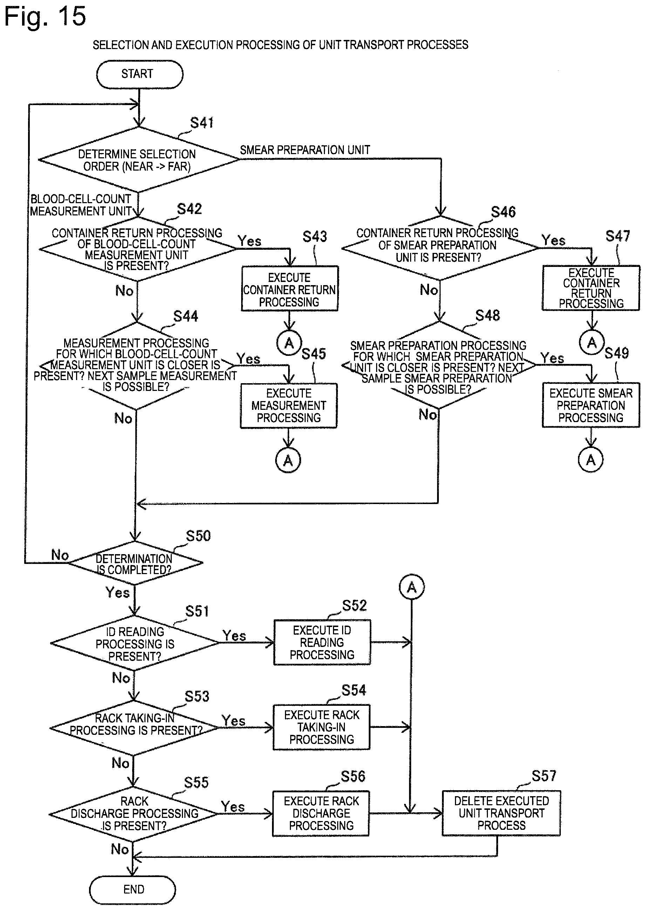

Fig. 15 illustrates a processing example of selection and execution processing of the unit transport process in step S2 (see Fig. 12).

In step S41, control unit 41 determines selection order of the unit transport processes to be executed. In this example, control unit 41 determines the selection order of the unit transport processes depending on the present position of sample rack 81 at selection and execution timing of each unit transport process.

Specifically, control unit 41 causes transport unit 30 to transport rack 81 preferentially to blood-cell-count measurement unit 10 or smear preparation unit 20 to which a distance from sample rack 81 is shorter. That is, first, control unit 41 determines whether to execute a unit transport process for blood-cell-count measurement unit 10 or smear preparation unit 20 which is closer from the present position of sample rack 81 and has a shorter transport distance of sample rack 81. In a case where the unit transport process for blood-cell-count measurement unit 10 or smear preparation unit 20 which has the shorter transport distance is absent, control unit 41 determines whether to execute the unit transport process for blood-cell-count measurement unit 10 or smear preparation unit 20 to which the transport distance is longer. In a case where the transport distance of sample rack 81 to blood-cell-count measurement unit 10 is shorter, control unit 41 advances the processing to step S42 first and determines blood-cell-count measurement unit 10 first. In a case where the transport distance of sample rack 81 to smear preparation unit 20 is shorter, control unit 41 advances processing to step S46 first and determines smear preparation unit 20 first.

In step S42, control unit 41 determines whether the container return processing of blood-cell-count measurement unit 10 is present in processing list 63. In a case where the container return processing is absent, control unit 41 advances the processing to step S44. In a case where the container return processing is present, in step S43, control unit 41 executes the container return processing and, after the execution, advances the processing to step S57.

In step S44, control unit 41 determines whether the following conditions (1) to (3) are satisfied. (1) The transport distance of sample rack 81 from the present position to blood-cell-count measurement unit 10 is shorter than the transport distance of sample rack 81 from the present position to smear preparation unit 20, (2) the measurement processing is present in processing list 63, and (3) blood-cell-count measurement unit 10 is usable to measure the next sample.

In a case where the conditions (1) to (3) are not satisfied, control unit 41 advances the processing to step S50. In a case where the conditions (1) to (3) are satisfied, control unit 41 executes the measurement processing in step S45 and, after the execution, advances the processing to step S57.

On the other hand, in step S46, control unit 41 determines whether the container return processing of smear preparation unit 20 is present in processing list 63. In a case where the container return processing is absent, control unit 41 advances the processing to step S48. In a case where the container return processing is present, in step S47, control unit 41 executes the container return processing and, after the execution, advances the processing to step S57.

In step S48, control unit 41 determines whether the following conditions (4) to (6) are satisfied. (4) The transport distance of sample rack 81 from the present position to smear preparation unit 20 is shorter than the transport distance of sample rack 81 from the present position to blood-cell-count measurement unit 10, (5) the smear preparation processing is present in processing list 63, and (6) smear preparation unit 20 is usable to perform the smear preparation of the next sample.

In a case where the conditions (4) to (6) are not satisfied, control unit 41 advances the processing to step S50. In a case where the conditions (4) to (6) are satisfied, control unit 41 executes the smear preparation processing in step S49 and, after the execution, advances the processing to step S57.

In step S50, control unit 41 determines whether the determination is completed for both of blood-cell-count measurement unit 10 or smear preparation unit 20, the transport distance of sample rack 81 to which from the present position is shorter, and blood-cell-count measurement unit 10 or smear preparation unit 20, the transport distance of sample rack 81 to which from the present position is longer. In a case where the determination is performed for only blood-cell-count measurement unit 10 or smear preparation unit 20, the transport distance of sample rack 81 to which is shorter, control unit 41 returns the processing to step S41 and executes the processing concerning blood-cell-count measurement unit 10 or smear preparation unit 20, the transport distance of sample rack 81 to which is longer. That is, in a case where the transport distance of sample rack 81 to blood-cell-count measurement unit 10 is shorter, control unit 41 advances the processing from step S41 to step S46. In a case where the transport distance of sample rack 81 to smear preparation unit 20 is shorter, control unit 41 advances the processing from step S41 to step S42.

In a case where the determination is completed for both of blood-cell-count measurement unit 10 and smear preparation unit 20, in step S51, control unit 41 determines whether the ID reading processing is present in processing list 63. In a case where the ID reading processing is present, in step S52, control unit 41 executes the ID reading processing.

In a case where the ID reading processing is absent, in step S54, control unit 41 determines whether the rack taking-in processing is present in processing list 63. In a case where the rack taking-in processing is present, in step S54, control unit 41 executes the rack taking-in processing.

In a case where the rack taking-in processing is absent, in step S55, control unit 41 determines whether the rack discharge processing is present in processing list 63.

In a case where the rack discharge processing is present, control unit 41 executes the rack discharge processing in step S56.

In a case where the rack discharge processing is absent, control unit 41 ends the selection and execution processing of the unit transport processes and advances the processing to step S3 in Fig. 12. When any one of the unit transport processes is executed in steps S43, S45, S47, S49, S52, S54, or S56, control unit 41 in step S57 deletes the executed unit transport process from processing list 63 and ends the selection and execution processing of the unit transport process.

In the processing example illustrated in Fig. 15 explained above, in steps S45 and S49, control unit 41 controls transport unit 30 to sequentially transport sample containers 80 held by sample rack 81 to first position 91 and second position 92. At this point, control unit 41 causes transport unit 30 to transport sample rack 81 preferentially to blood-cell-count measurement unit 10 or smear preparation unit 20, the distance from sample rack 81 to which is shorter (the processing in step S44 or S48). Consequently, the transport distance is reduced. It is possible to reduce a time required for executing each of the unit transport processes. Therefore, a standby time for transport waiting is prevented from occurring in blood-cell-count measurement unit 10 and smear preparation unit 20. As a result, it is possible to effectively reduce the processing time required for the sample test.

Further, in the processing example illustrated in Fig. 15, in steps S42 and S46, before first processing (the processing in step S44 or S48), control unit 41 performs second processing (the processing in steps S42 and S46) for more preferentially selecting the container return processing for collecting sample container 80 from blood-cell-count measurement unit 10 or smear preparation unit 20 than the measurement processing or the smear preparation processing for transporting sample container 80 to blood-cell-count measurement unit 10 or smear preparation unit 20. Consequently, it is possible to smoothly execute a series of transport processing including the collection of transported sample container 80 prior to the transport of the next sample container 80 and the transport of the next sample container 80. As a result, it is possible to suppress a standby time of blood-cell-count measurement unit 10 and smear preparation unit 20 as much as possible and effectively reduce the processing time required for the sample test.

In the processing example illustrated in Fig. 15, in step S44 or S48, control unit 41 causes, depending on an operation state of each of blood-cell-count measurement unit 10 and smear preparation unit 20, transport unit 30 to transport sample rack 81. That is, depending on an operation state indicating whether blood-cell-count measurement unit 10 is usable to perform the next sample measurement and whether smear preparation unit 20 is usable to perform smear preparation of the next sample, control unit 41 selects whether to execute the measurement processing or the smear preparation processing. Consequently, it is possible to efficiently select a processable unit transport process depending on not only the transport distance of sample rack 81 but also the operation states of blood-cell-count measurement unit 10 and smear preparation unit 20. As a result, it is possible to prevent the transport of sample rack 81 from being stopped by a processing wait of blood-cell-count measurement unit 10 and smear preparation unit 20. Therefore, it is possible to improve efficiency of the transporting operation and effectively reduce the processing time required for the sample test.

### (Operation example of the blood sample testing apparatus)

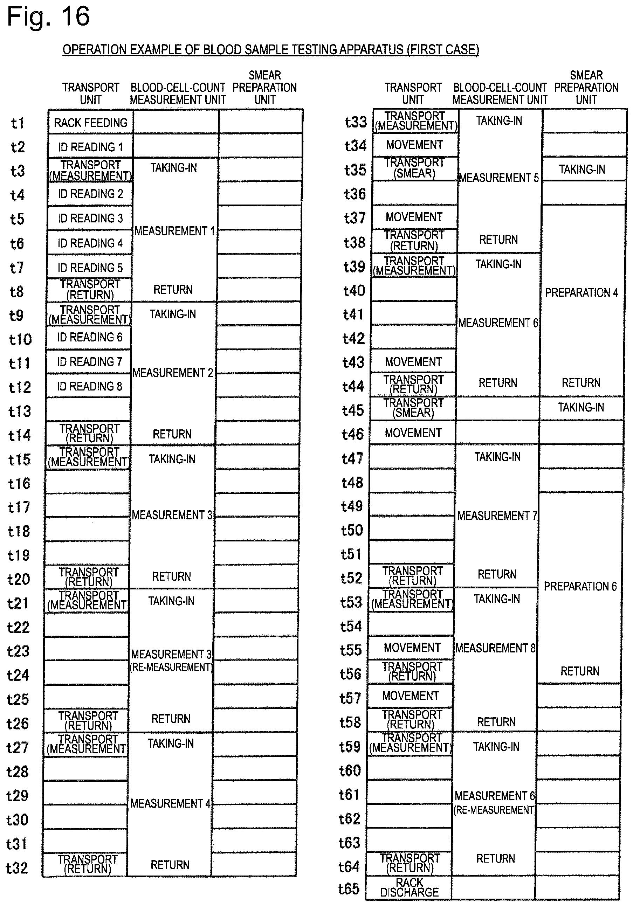

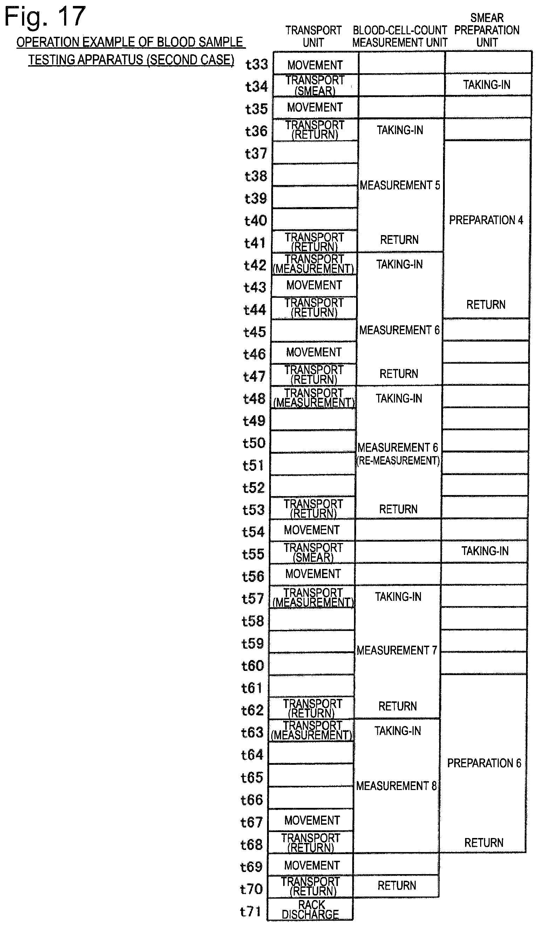

An example of the operation of blood sample testing apparatus 100 is explained with reference to Figs. 16 and 17. For convenience, an example is explained in which eight sample containers 80 are transported concerning only one sample rack 81. Orders concerning first to eighth eight sample containers 80 are as described below. First: the initial test is present, the retest is absent, and the smear preparation is absent, second: the initial test is present, the retest is absent, and the smear preparation is absent, third: the initial test is present, the retest is present, and the smear preparation is absent, fourth: the initial test is present, the retest is absent, and the smear preparation is present, fifth: the initial test is present, the retest is absent, and the smear preparation is absent, sixth: the initial test is present, the retest is present, and the smear preparation is present, seventh: the initial test is present, the retest is absent, and the smear preparation is absent, and eighth: the initial test is present, the retest is absent, and the smear preparation is absent. That is, the operation example indicates a case in which the retest order is present in the third sample, and both of the retest order and the smear preparation order are set for the sixth sample. Only the measurement order of the initial test is present for the other samples.

In Fig. 16, the transporting operations are sequence processing at a unit time interval. A time interval at time t1 to time t65 in Fig. 16 is common. Control unit 41 controls the transport of sample rack 81 by selecting and executing one kind of unit transport process at every unit time interval.

When sample rack 81 is fed into belt unit 31 at time t1, a sample ID of first sample container 80 is read at time t2. First sample container 80 is transported to first position 91 at time t3 and measurement of the first sample by blood-cell-count measurement unit 10 is started. At time t8, a first holding position of sample rack 81 is moved to first position 91, and first sample container 80 is returned from blood-cell-count measurement unit 10.

Second sample container 80 is transported to blood-cell-count measurement unit 10 at time t9 and returned from blood-cell-count measurement unit 10 at time t14. Third sample container 80 is transported to blood-cell-count measurement unit 10 at time t15 and returned from blood-cell-count measurement unit 10 at time t20.

In this operation example, the retest of third sample container 80 is performed next. Returned third sample container 80 is transported to blood-cell-count measurement unit 10 again at time t21 and returned from blood-cell-count measurement unit 10 at time t26. Fourth sample container 80 is transported to blood-cell-count measurement unit 10 at time t27 and returned from blood-cell-count measurement unit 10 at time t32.

Fifth sample container 80 is transported to blood-cell-count measurement unit 10 at time t33 and returned from blood-cell-count measurement unit 10 at time t38. Between time t33 and time 38, immediately after fifth sample container 80 is transported to blood-cell-count measurement unit 10 at time t33, movement of sample rack 81 to smear preparation unit 20 side is started at time t34, and fourth sample container 80 is transported to smear preparation unit 20 at time t35. Movement of sample rack 81 to blood-cell-count measurement unit 10 side is started at time t37, and sample rack 81 is returned to blood-cell-count measurement unit 10 side. This is equivalent to the transporting operation illustrated in Figs. 9A to 9C.

Fourth sample container 80 is returned from smear preparation unit 20 to sample rack 81 at time t44. Sixth sample container 80 is transported to blood-cell-count measurement unit 10 at time t39 and returned from blood-cell-count measurement unit 10 at time t44. Sixth sample container 80 is transported to smear preparation unit 20 at time t45. Seventh sample container 80 is transported to blood-cell-count measurement unit 10 at time t47 and returned from blood-cell-count measurement unit 10 at time t52.

Eighth sample container 80 is transported to blood-cell-count measurement unit 10 at time t53 and returned from blood-cell-count measurement unit 10 at time t58. Between time t53 and time t58, movement of sample rack 81 to smear preparation unit 20 side is started at time t55. Sixth sample container 80 is returned from smear preparation unit 20 to sample rack 81 at time t56. Movement of sample rack 81 to blood-cell-count measurement unit 10 side is started at time t57, and sample rack 81 is returned to blood-cell-count measurement unit 10 side. This is equivalent to the transporting operation illustrated in Figs. 9C to 9E.

Thereafter, the retest of sixth sample container 80 is performed. Sixth sample container 80 is transported to blood-cell-count measurement unit 10 again at time t59 and returned from blood-cell-count measurement unit 10 at time t64. In this example, in the operation example illustrated in Fig. 16, for sixth sample container 80 after the measurement of the initial test is performed, both of the retest order and the smear preparation order are set. Therefore, the second transport (see Fig. 11) for transporting sixth sample container 80 first to smear preparation unit 20 and then to blood-cell-count measurement unit 10 is selected. The transport is executed in the order of the smear preparation at time t49 to time t56 and the retest at time t59 to time t64.

Consequently, the measurement and the smear preparation of all of sample containers 80 held by sample rack 81 are completed. Therefore, sample rack 81 is discharged from belt unit 31 to sample-rack collection unit 33 at time t65.

Note that, although not illustrated in the figure, in a case where sample rack 81 is transported to smear preparation unit 20 and the smear preparation is performed after all the kinds of sample measurement including the initial test and the retest are ended, sample rack 81 is discharged to sample-rack collection unit 33 at time t87. Therefore, as illustrated in Figs. 9A to 9E, it is seen that, while one sample container 80 is transported to blood-cell-count measurement unit 10, another sample container 80 is transported to smear preparation unit 20, whereby the processing time required for the sample test is reduced.

Fig. 17 illustrates an example in which the transport of sixth sample container 80 is changed to the first transport for transporting sixth sample container 80 first to blood-cell-count measurement unit 10 and then to smear preparation unit 20. In Fig. 17, operation before time t33 is the same as the operation illustrated in Fig. 16. Therefore, explanation of the operation is omitted.

In this case, in order to shift timing for collecting fourth sample container 80 from smear preparation unit 20, measurement of fifth sample container 80 started at time t36. Therefore, the initial test of sixth sample container 80 is delayed and ends at time t47. Returned sixth sample container 80 is transported to blood-cell-count measurement unit 10 again at time t48 and returned to sample rack 81 at time t53. Thereafter, sixth sample container 80 is transported to smear preparation unit 20 at time t55 and returned to sample rack 81 at time t68. The measurement and the smear preparation of all of sample containers 80 are completed and sample containers 80 are discharged to sample rack 81 at time t71.

Therefore, in this operation example, since the first transport illustrated in Fig. 16 is selected rather than the first transport illustrated in Fig. 17, it is possible to further reduce the processing time by six unit times. Although it may be needless to explained, in a case where condition setting and the like of sample containers 80 for which the retest order and the smear preparation order are set are different, it is sometimes possible to reduce the processing time by selecting the first transport rather than the second transport.

According to the above explanation, since sample containers 80 for which the retest order and the smear preparation order are set and sample container 80 for which the retest order and the smear preparation order are not set are mixed, the transporting operation of sample rack 81 is complicated. As in one or more embodiments, it is seen that the processing time required for the sample test is effectively reduced by the control for selecting the first transport and the second transport and preferentially transporting sample rack 81 to blood-cell-count measurement unit 10 or smear preparation unit 20, to which the transport distance of sample rack 81 is shorter.

Note that it should be considered that the embodiment disclosed herein is illustrative in all aspects and is not limiting. The scope of the present invention is indicated by claims rather than the above explanation of the embodiment. Further, all changes within meanings and scopes equivalent to the claims are included in the scope of the present invention.

## Claims

1. A blood sample testing apparatus comprising:
a blood-cell-count measurement unit (10) that performs measurement of a blood sample stored in a sample container (80) positioned in a first position (91);
a smear preparation unit (20) that prepares a smear of the blood sample stored in the sample container (80) positioned in a second position (92); and
a transport unit (30) that transports the sample container (80) from the first position (91) to the second position (92) and from the second position (92) to the first position (91),
wherein the transport unit (30) is adapted to transport a sample rack (81) capable of holding a plurality of sample containers (80), such that the plurality of sample containers (80) held by the sample rack (81) can be transported to the first position (91) and to the second position (92),
**characterized in that**: the blood sample testing apparatus further comprises a control unit (41) that selects which of the first position (91) and the second position (92) the sample container for which measurement of an initial test is already performed by the blood-cell-count measurement unit (10) is to be first transported to, and **in that**: the control unit (41) causes the transport unit (30) to transport the sample container for which the measurement of the initial test is already performed by blood-cell-count measurement unit (10) to one of the first position (91) and the second position (92), to which a transport distance of the sample rack is shorter.

2. The blood sample testing apparatus according to claim 1, wherein the transport unit (30) comprises a belt unit (31) configured to transport the sample container (80) in a forward direction from the first position (91) to the second position (92) and in a backward direction from the second position (92) to the first position (91).

3. The blood sample testing apparatus according to claim 2, wherein the belt unit (31) comprises a first belt (31a) configured to transport the sample container in the forward direction and a second belt (31b) configured to transport the sample container in the backward direction.

4. The blood sample testing apparatus according to claim 1, further comprising a control unit (41) that causes the transport unit (30) to transport a first sample container (80) of the plurality of sample containers held by the sample rack (81) to the first position (91) and thereafter to transport, before collecting the first sample container (80) into the sample rack (81), a second sample container of the plurality of sample containers (80) held by the sample rack (81) to the second position (92).

5. The blood sample testing apparatus according to claim 1, wherein the control unit (41) causes the transport unit (30) to transport the second sample container to the second position (92) and thereafter to collect, before collecting the second sample container into the sample rack (81), the first sample container (80) into the sample rack (81) from the first position (91).

6. The blood sample testing apparatus according to claim 1, wherein
in a condition in which both of a retest order and a smear preparation order are set for the sample container (80) for which the measurement of the initial test is already performed, the control unit (41) causes the transport unit (30) to transport the sample container (80) in either one of:
first transport of transporting the sample container (80) first to the first position (91) and then to the second position (92), and
second transport of transporting the sample container first to the second position (92) and then to the first position (91).

7. The blood sample testing apparatus according to claim 6, wherein
in a condition in which a transport distance of the sample rack (81) to the first position (91) is shorter than a transport distance of the sample rack (81) to the second position (92), and the blood-cell-count measurement unit (10) is usable to measure the blood sample, the control unit (41) selects the first transport.

8. The blood sample testing apparatus according to claim 6, wherein
in a condition in which a transport distance of the sample rack (81) to the second position (92) is shorter than a transport distance of the sample rack (81) to the first position (91), and the smear preparation unit (20) is usable to prepare the smear of the blood sample, the control unit (41) selects the second transport.

9. The blood sample testing apparatus according to claim 1, further comprises a control unit (41), wherein
the smear preparation unit (20) prepares the smear under a smearing condition based on a measurement result of the blood sample generated by the blood-cell-count measurement unit (10), and,
in a condition in which a smear preparation order is set based on the measurement result of the blood sample, the control unit (41) causes the transport unit (30) to transport the sample container to the second position (92) after the blood-cell-count measurement unit (10) generates the measurement result of the blood sample.

10. The blood sample testing apparatus according to claim 9, wherein,
in a condition in which a smear preparation order is set before the measurement of the blood sample is performed, the control unit (41) causes the transport unit (30) to transport the sample container to the second position (92) before the blood-cell-count measurement unit (10) generates the measurement result of the blood sample.

11. A blood sample testing method comprising:
transporting a sample rack (81) that holds sample containers (80) to a first position (91) and performing blood-cell-count measurement of a blood sample stored in a sample container (80);
transporting the sample rack (81) from the first position (91) to the second position (92) and preparing a smear of a blood sample stored in a sample container (80); and
transporting the sample rack (81) from the second position (92) to the first position (91) and performing blood-cell-count measurement of a blood sample stored in a sample container (80)
the blood sample testing method further comprising:
performing blood-cell-count measurement of a blood sample stored in a first sample container (80) of sample containers held by the sample rack (81) transported to the first position (91);
before the first sample container is collected into the sample rack (81) at the first position (91), transporting the sample rack to the second position (92) and performing preparation of a smear of a blood sample stored in a second sample container (80) of sample containers held by the sample rack (81), and transporting the sample container (80) for which the measurement of the initial test is already performed by blood-cell-count measurement unit (10) to one of the first position (91) and the second position (92), to which a transport distance of the sample rack (81) is shorter.

## Patentansprüche

1. Blutprobentestvorrichtung, umfassend:
eine Messeinheit (10) zum Zählen der Blutzellen, die eine Messung einer Blutprobe durchführt, die in einem Probebehälter (80) gelagert wird, der in einer ersten Position (91) positioniert ist;
eine Ausstrichpräparat-Einheit (20), die einen Ausstrich der Blutprobe präpariert, die in einem Probebehälter (80) gelagert wird, der in einer zweiten Position (92) positioniert ist; und
eine Transporteinheit (30), die den Probebehälter (80) von der ersten Position (91) zu der zweiten Position (92), und von der zweiten Position (92) zu der ersten Position (91) transportiert,
wobei die Transporteinheit (30) ausgeführt ist, um ein Probegestell (81), das imstande ist, eine Vielzahl von Probebehältern (80) zu halten, zu transportieren, sodass die Vielzahl von Probebehältern (80), die von dem Probegestell (81) gehalten werden, zu der ersten Position (91) und zu der zweiten Position (92) transportiert werden können,
**dadurch gekennzeichnet, dass**: die Blutprobentestvorrichtung weiter eine Steuerungseinheit (41) umfasst, die auswählt, zu welcher von der ersten Position (91) und der zweiten Position (92) der Probebehälter, für den eine Messung eines ursprünglichen Tests bereits durch die Messeinheit (10) zum Zählen der Blutzellen durchgeführt worden ist, zuerst zu transportieren ist, und dadurch, dass: die Steuerungseinheit (41) bewirkt, dass die Transporteinheit (30) den Probebehälter, für den die Messung des ursprünglichen Tests bereits durch die Messeinheit (10) zum Zählen der Blutzellen durchgeführt worden ist, zu einer von der ersten Position (91) und der zweiten Position (92) transportiert, zu der ein Transportabstand des Probegestells kürzer ist.

2. Blutprobentestvorrichtung nach Anspruch 1, wobei die Transporteinheit (30) eine Bandeinheit (31) umfasst, die konfiguriert ist, um den Probebehälter (80) in eine Vorwärtsrichtung von der ersten Position (91) zu der zweite Position (92) und in eine Rückwärtsrichtung von der zweiten Position (92) zu der erste Position (91) zu transportieren.

3. Blutprobentestvorrichtung nach Anspruch 2, wobei die Bandeinheit (31) ein erstes Band (31a), das konfiguriert ist, um den Probebehälter in die Vorwärtsrichtung zu transportieren, und ein zweites Band (31b), das konfiguriert ist, um den Probebehälter in die Rückwärtsrichtung zu transportieren, umfasst.

4. Blutprobentestvorrichtung nach Anspruch 1, weiter umfassend eine Steuerungseinheit (41), die bewirkt, dass die Transporteinheit (30) einen ersten Probebehälter (80) der Vielzahl von Probebehältern, die von dem Probegestell (81) gehalten werden, zu der ersten Position (91) zu transportieren, und danach, vor dem Einsammeln des ersten Probebehälters (80) in das Probegestell (81), einen zweiten Probebehälter der Vielzahl von Probebehältern (80), die von dem Probegestell (81) gehalten werden, zu der zweiten Position (92) zu transportieren.

5. Blutprobentestvorrichtung nach Anspruch 1, wobei die Steuerungseinheit (41) bewirkt, dass die Transporteinheit (30) den zweiten Probebehälter zu der zweiten Position (92) transportiert und danach, vor dem Einsammeln des zweiten Probebehälters in das Probegestell (81), den ersten Probebehälter (80) von der ersten Position (91) in das Probegestell (81) einsammelt.

6. Blutprobentestvorrichtung nach Anspruch 1, wobei
unter einer Bedingung, bei der beide, von einem Wiederholungstestbefehl und einem Befehl für ein Ausstrichpräparat für den Probebehälter (80) gesetzt werden, bei dem die Messung des ursprünglichen Tests bereits durchgeführt worden ist, die Steuerungseinheit (41) bewirkt, dass die Transporteinheit (30) den Probebehälter (80) in einem der Folgenden transportiert:
einem ersten Transport zum Transportieren des Probebehälters (80) zuerst zu der ersten Position (91) und danach zu der zweiten Position (92), und
einem zweiten Transport zum Transportieren des Probebehälters zuerst zu der zweiten Position (92) und danach zu der ersten Position (91).

7. Blutprobentestvorrichtung nach Anspruch 6, wobei
unter einer Bedingung, bei der ein Transportabstand des Probegestells (81) zu der ersten Position (91) kürzer ist als ein Transportabstand des Probegestells (81) zu der zweiten Position (92), und die Messeinheit (10) zum Zählen der Blutzellen verwendbar ist, um die Blutprobe zu messen, die Steuerungseinheit (41) den ersten Transport auswählt.

8. Blutprobentestvorrichtung nach Anspruch 6, wobei
unter einer Bedingung, bei der ein Transportabstand des Probegestells (81) zu der zweiten Position (92) kürzer ist als ein Transportabstand des Probegestells (81) zu der ersten Position (91), und die Ausstrichpräparat-Einheit (20) verwendbar ist, um den Ausstrich der Blutprobe zu präparieren, die Steuerungseinheit (41) den zweiten Transport auswählt.

9. Blutprobentestvorrichtung nach Anspruch 1, weiter eine Steuerungseinheit (41) umfassend, wobei
die Ausstrichpräparat-Einheit (20) den Ausstrich unter einer Ausstrich-Bedingung basierend auf einem Messergebnis der Blutprobe präpariert, das durch die Messeinheit (10) zum Zählen der Blutzellen erzeugt wird, und
unter einer Bedingung, bei der ein Befehl für ein Ausstrichpräparat basierend auf dem Messergebnis der Blutprobe gesetzt wird, die Steuerungseinheit (41) bewirkt, dass die Transporteinheit (30) den Probebehälter zu der zweiten Position (92) transportiert, nachdem die Messeinheit (10) zum Zählen der Blutzellen das Messergebnis der Blutprobe erzeugt hat.

10. Blutprobentestvorrichtung nach Anspruch 9, wobei
unter einer Bedingung, bei der ein Befehl für ein Ausstrichpräparat gesetzt wird, bevor die Messung der Blutprobe durchgeführt worden ist, die Steuerungseinheit (41) bewirkt, dass die Transporteinheit (30) den Probebehälter zu der zweiten Position (92) transportiert, bevor die die Messeinheit (10) zum Zählen der Blutzellen das Messergebnis der Blutprobe erzeugt hat.

11. Blutprobentestverfahren, umfassend:
Transportieren eines Probegestells (81), das Probebehälter (80) hält, zu einer ersten Position (91) und Durchführen einer Messung zum Zählen der Blutzellen einer Blutprobe, die in einem Probebehälter (80) gelagert wird;
Transportieren des Probegestells (81) von der ersten Position (91) zu der zweiten Position (92) und Präparieren eines Ausstrichs einer Blutprobe, die in einem Probebehälter (80) gelagert wird; und
Transportieren des Probegestells (81) von der zweiten Position (92) zu der ersten Position (91) und Durchführen einer Messung zum Zählen der Blutzellen einer Blutprobe, die in einem Probebehälter (80) gelagert wird, wobei das Blutprobentestverfahren weiter umfasst:
Durchführen einer Messung zum Zählen der Blutzellen einer Blutprobe, die in einem ersten Probebehälter (80) von Probebehältern gelagert wird, die durch das Probegestell (81) gehalten werden, das zu der ersten Position (91) transportiert wird;
bevor der erste Probebehälter in das Probegestell (81) in der ersten Position (91) eingesammelt wird, Transportieren des Probegestells zu der zweiten Position (92) und Durchführen einer Präparation eines Ausstrichs einer Blutprobe, die in einem zweiten Probebehälter (80) von Probebehältern gelagert wird, die durch das Probegestell (81) gehalten werden, und Transportieren des Probebehälters (80), bei dem die Messung des ursprünglichen Tests durch die Messeinheit (10) zum Zählen der Blutzellen bereits durchgeführt worden ist, zu einer von der ersten Position (91) und der zweiten Position (92), zu der ein Transportabstand des Probegestells (81) kürzer ist.

## Revendications

1. Appareil de test d'échantillons sanguins comprenant :
une unité de mesure de numération globulaire (10) qui effectue une mesure d'un échantillon sanguin stocké dans un contenant d'échantillon (80) positionné dans une première position (91) ;
une unité de préparation d'étalement (20) qui prépare un étalement de l'échantillon sanguin stocké dans le contenant d'échantillon (80) positionné dans une seconde position (92) ; et
une unité de transport (30) qui transporte le contenant d'échantillon (80) de la première position (91) à la seconde position (92) et de la seconde position (92) à la première position (91),
dans lequel l'unité de transport (30) est à même de transporter un porte-échantillons (81) capable de contenir une pluralité de contenants d'échantillons (80) de sorte que la pluralité de contenants d'échantillons (80) contenus dans le porte-échantillons (81) puisse être transportée dans la première position (91) et dans la seconde position (92),
**caractérisé en ce que** : l'appareil de test d'échantillons sanguins comprend en outre une unité de commande (41) qui sélectionne celle de la première position (91) et de la seconde position (92) à laquelle le contenant d'échantillon pour lequel une mesure d'un test initial est déjà effectuée par l'unité de mesure de numération globulaire (10) doit être transporté en premier lieu et **en ce que** l'unité de commande (41) amène l'unité de transport (30) à transporter le contenant d'échantillon pour lequel la mesure du test initial est déjà effectuée par l'unité de mesure de numération globulaire (10) à l'une de la première position (91) et de la seconde position (92), à laquelle la distance de transport du porte-échantillons est la plus courte.

2. Appareil de test d'échantillons sanguins selon la revendication 1, dans lequel l'unité de transport (30) comprend une unité à courroie (31) configurée pour transporter le contenant d'échantillon (80) dans une direction avant de la première position (91) à la seconde position (92) et dans une direction arrière de la seconde position (92) à la première position (91).

3. Appareil de test d'échantillons sanguins selon la revendication 2, dans lequel l'unité à courroie (31) comprend une première courroie (31a) configurée pour transporter le contenant d'échantillon dans la direction avant et une seconde courroie (31b) configurée pour transporter le contenant d'échantillon dans la direction arrière.

4. Appareil de test d'échantillons sanguins selon la revendication 1, comprenant en outre une unité de commande (41) qui amène l'unité de transport (30) à transporter un premier contenant d'échantillon (80) de la pluralité de contenants d'échantillons contenus dans le porte-échantillons (81) dans la première position (91) et, ensuite, à transporter, avant de recueillir le premier contenant d'échantillon (80) dans le porte-échantillons (81), un second contenant d'échantillon de la pluralité de contenants d'échantillons (80) contenus dans le porte-échantillons (81) dans la seconde position (92).

5. Appareil de test d'échantillons sanguins selon la revendication 1, dans lequel l'unité de commande (41) amène l'unité de transport (30) à transporter le second contenant d'échantillon dans la seconde position (92) et, ensuite, à recueillir, avant de recueillir le second contenant d'échantillon dans le porte-échantillons (81), le premier contenant d'échantillon (80) dans le porte-échantillons (81) depuis la première position (91).

6. Appareil de test d'échantillons sanguins selon la revendication 1, dans lequel :
dans une situation où à la fois un ordre de re-test et un ordre de préparation d'étalement sont établis pour le contenant d'échantillon (80) pour lequel la mesure du test initial est déjà effectuée, l'unité de commande (41) amène l'unité de transport (30) à transporter le contenant d'échantillon (80) dans l'un ou l'autre :
d'un premier transport pour transporter le contenant d'échantillon (80) tout d'abord dans la première position (91), et ensuite dans la seconde position (92), et
d'un second transport pour transporter le contenant d'échantillon tout d'abord dans la seconde position (92), puis dans la première position (91).

7. Appareil de test d'échantillons sanguins selon la revendication 6, dans lequel,
dans une situation dans laquelle une distance de transport du porte-échantillons (81) à la première position (91) est plus courte qu'une distance de transport du porte-échantillons (81) à la seconde position (92) et l'unité de mesure de numération globulaire (10) est utilisable pour mesurer l'échantillon sanguin, l'unité de commande (41) sélectionne le premier transport.

8. Appareil de test d'échantillons sanguins selon la revendication 6, dans lequel,
dans une situation dans laquelle une distance de transport du porte-échantillons (81) à la seconde position (92) est plus courte qu'une distance de transport du porte-échantillons (81) à la première position (91) et l'unité de préparation d'étalement (20) est utilisable pour préparer l'étalement de l'échantillon sanguin, l'unité de commande (41) sélectionne le second transport.

9. Appareil de test d'échantillons sanguins selon la revendication 1, qui comprend en outre une unité de commande (41), dans lequel :
l'unité de préparation d'étalement (20) prépare l'étalement dans une condition d'étalement basée sur un résultat de mesure de l'échantillon sanguin généré par l'unité de mesure de numération globulaire (10) et
dans une situation dans laquelle un ordre de préparation d'étalement est établi sur la base du résultat de mesure de l'échantillon sanguin, l'unité de commande (41) amène l'unité de transport (30) à transporter le contenant d'échantillon dans la seconde position (92) une fois que l'unité de mesure de numération globulaire (10) a généré le résultat de mesure de l'échantillon sanguin.

10. Appareil de test d'échantillons sanguins selon la revendication 9, dans lequel,
dans une situation dans laquelle un ordre de préparation d'étalement est établi avant que la mesure de l'échantillon sanguin ne soit effectuée, l'unité de commande (41) amène l'unité de transport (30) à transporter le contenant d'échantillon dans la seconde position (92) avant que l'unité de mesure de numération globulaire (10) ne génère le résultat de mesure de l'échantillon sanguin.

11. Procédé de test d'échantillons sanguins comprenant :
le transport d'un porte-échantillons (81) qui contient des contenants d'échantillons (80) dans une première position (91) et la réalisation d'une mesure de la numération globulaire d'un échantillon sanguin stocké dans un contenant d'échantillon (80) ;
le transport du porte-échantillons (81) de la première position (91) à la seconde position (92) et la préparation d'un étalement d'un échantillon sanguin stocké dans un contenant d'échantillon (80) ; et
le transport du porte-échantillons (81) de la seconde position (92) à la première position (91) et la réalisation d'une mesure de numération globulaire d'un échantillon sanguin stocké dans un contenant d'échantillon (80),
le procédé de test d'échantillon sanguin comprenant en outre :
la réalisation d'une mesure de numération globulaire d'un échantillon sanguin stocké dans un premier contenant d'échantillon (80) de contenants d'échantillons contenus dans le porte-échantillons (81) transporté dans la première position (91) ;
avant que le premier contenant d'échantillon ne soit recueilli dans le porte-échantillons (81) au niveau de la première position (91), le transport du porte-échantillons dans la seconde position (92) et la réalisation de la préparation d'un étalement d'un échantillon sanguin stocké dans un second contenant d'échantillon (80) de contenants d'échantillons contenus dans le porte-échantillons (81) et le transport du contenant d'échantillon (80) pour lequel la mesure du test initial est déjà effectuée par l'unité de mesure de numération globulaire (10) dans l'une de la première position (91) et de la seconde position (92), à laquelle la distance de transport du porte-échantillons (81) est plus courte.
